(19) **Europäisches Patentamt**

**European Patent Office**

**Office européen des brevets**

(11) **EP 1 358 003 B1**

(12) **FASCICULE DE BREVET EUROPEEN**

(45) Date de publication et mention
de la délivrance du brevet:
**11.10.2006 Bulletin 2006/41**

(21) Numéro de dépôt: **01995731.5**

(22) Date de dépôt: **18.12.2001**

(51) Int Cl.:
***B01D 71/02*** (2006.01)    ***B01D 53/22*** (2006.01)
***B01D 53/32*** (2006.01)    ***C01B 13/02*** (2006.01)

(86) Numéro de dépôt international:
**PCT/FR2001/004036**

(87) Numéro de publication internationale:
**WO 2002/058830 (01.08.2002 Gazette 2002/31)**

(54) **STRUCTURES-MICROSTRUCTURES DE MEMBRANE CERAMIQUE CONDUCTEURS PAR IONS OXYDE POUR LA PRODUCTION D'OXYGENE SOUS PRESSION ELEVEE**

GESTAPELTE MIKROSTRUKTUREN LEITENDER, KERAMISCHER OXIDIONENMEMBRANEN; VERWENDUNG ZUR HOCHDRUCKSAUERSTOFFPRODUKTION

OXIDE ION CONDUCTIVE CERAMIC MEMBRANE STACKED MICROSTRUCTURES FOR HIGH-PRESSURE OXYGEN PRODUCTION

(84) Etats contractants désignés:
**AT BE CH CY DE DK ES FI FR GB GR IE IT LI LU MC NL PT SE TR**

(30) Priorité: **26.01.2001 FR 0101087**

(43) Date de publication de la demande:
**05.11.2003 Bulletin 2003/45**

(73) Titulaire: **L'AIR LIQUIDE, SOCIETE ANONYME POUR L'ETUDE ET L'EXPLOITATION DES PROCEDES GEORGES CLAUDE**
**75321 Paris Cédex 07 (FR)**

(72) Inventeurs:
• **CHAPUT, Christophe**
  **F-87000 Limoges (FR)**
• **TERRACOL, Thierry**
  **F-87100 Limoges (FR)**
• **BACH, Gisèle**
  **F-87100 Limoges (FR)**
• **GOURIOU, Guylaine**
  **F-78280 Guyancourt (FR)**
• **DEL GALLO, Pascal**
  **91410 Dourdan (FR)**

(74) Mandataire: **Conan, Philippe Claude**
**L'Air Liquide SA,**
**75 Quai d'Orsay**
**75321 Paris Cedex 07 (FR)**

(56) Documents cités:
**EP-A- 0 424 691**    **WO-A-96/28856**
**WO-A-98/48923**    **US-A- 5 935 533**

**EP 1 358 003 B1**

**Description**

L'invention se rapporte au domaine de l'électrochimie solide.

La cellule électrochimique élémentaire, mise en oeuvre pour séparer l'oxygène de l'air ou d'un mélange gazeux le contenant, est constituée généralement d'un système ternaire électrolyte solide / électrodes / collecteurs de courant.

Les électrolytes solides, utilisés pour la séparation de l'oxygène de mélange gazeux, sont des oxydes céramiques dopés qui, à la température d'utilisation, se présentent sous forme d'un réseau cristallin possédant des lacunes en ions oxyde. Les structures cristallines associées peuvent être, par exemple, des phases cubique, fluorite, pérovskite, Brown - millerite, dites d'Aurivillius ; J.C. Boivin et G. Mairesse ont référencé toutes les phases cristallines conducteurs anioniques $O^{2-}$ dans un article général (Chem. Mat., 1998, pp2870-2888; "Recent Material Developments in Fast Oxide Ion Conductors").

Les matériaux d'électrodes associés à l'électrolyte solide sont généralement des pérovskites. Ce sont des matériaux possédant une structure cristalline de type $ABO_3$ ou $AA'BB'O_6$ (A, A' : lanthanide et/ou actinide, B, B' : métaux de transition) fondée sur la structure de la pérovskite naturelle, $CaTiO_3$. Ces matériaux présentent de bonnes propriétés de conductivité mixte (ionique et électronique) grâce à cette structure cristalline cubique dans laquelle les ions métalliques se trouvent aux sommets et au centre d'un cube élémentaire et les ions oxygène aux milieux des arêtes de ce cube. Les matériaux d'électrodes peuvent aussi être des mélanges matériaux pérovskites/conducteur purement ionique ou encore des mélanges à base de matériaux possédant d'autres phases cristallines, par exemple de type Aurivillius, Brown - millerite ou pyrochlore.

Le collectage de courant est assuré soit par un métal ou une laque de métal, soit par un mélange métal / céramique "oxyde inerte" telle que l'alumine, soit par un mélange métal / carbure tel que le carbure de silicium ou par un mélange métal / nitrure tel que le nitrure de silicium, dans lequel le rôle principal de l'oxyde, du carbure ou du nitrure est de bloquer mécaniquement les phénomènes de ségrégation - frittage apparaissant du fait des hautes températures de fonctionnement (700 °C < T < 900 °C), notamment lorsque l'on utilise l'argent comme métal collecteur de courant, soit par un mélange métal / céramique oxyde "conducteur mixte" tel qu'un oxyde de structure pérovskite de la famille des manganites de lanthane dopés au strontium, soit par un mélange métal / céramique oxyde "conducteur ionique" tel que la zircone stabilisée à l'yttrium.

Cependant la demanderesse a constaté que lorsque l'on fait fonctionner, à une température comprise entre 700 et 1000 °C, sous pression externe d'oxygène comprise entre 100 et 150 x $10^5$ Pa (100-150 bars), une cellule électrochimique tubulaire fermée à une extrémité, dans laquelle l'électrolyte solide est de l'oxyde de zirconium stabilisé avec 8% molaire d'oxyde d'yttrium (YSZ 8% mol.), les électrodes sont en $La_{0,9}Sr_{0,1}MnO_{3-\delta}$.(LSM), le collecteur de courant cathodique est une laque d'argent et le collecteur de courant anodique une laque d'or, on observe, dans le cas de production d'oxygène, en externe de l'unité, sous pression (100 -150 x $10^5$ Pa.), un potentiel de cellule élevé (de l'ordre de 1,7-1,8 V) pour une intensité appliquée faible (3-3,5 A soit 0,03-0,04 A/cm$^2$). A titre de comparaison, des unités possédant de la laque d'argent comme collecteur de courant anodique présentent, pour des pressions maximales de travail de 10 à 20 bars d'oxygène, des potentiels de cellule de l'ordre de 1 à 1,5 V pour des densités de courant de 0,15 A/cm$^2$.

On a observé, pour des cellules tubulaires en zircone dopée à l'yttrium avec des collecteurs de courant anodiques à base d'argent et sous des pressions d'oxygène supérieures à 50 bars et des températures supérieures à 750 °C, un phénomène d'évaporation dudit métal à cause de l'abaissement de la température de fusion $T_f$(°C) de ce métal par dissolution de l'oxygène suivant la relation :

$$T_f(Ag) = 961 - 22{,}31.P^{1/2}$$

La conséquence de cette évaporation, est une dégradation rapide des performances électrochimiques des cellules, se caractérisant par une augmentation brutale du potentiel et une chute du rendement faradique. Dans le cas de la production d'oxygène sous pression élevée (> 50 x $10^5$ Pa) par cellule tubulaire YSZ, l'emploi d'argent est donc à proscrire en raison de ses propriétés physico-chimiques. C'est pourquoi le collecteur de courant à base d'argent présent, sous forme de laque ou sous forme de cermet argent/oxyde céramique, est généralement remplacé par un collecteur de courant anodique en laque d'or.

Cette substitution permet le fonctionnement des cellules sous forte pression (P(O$_2$) compris entré 50 et 150 x $10^5$ Pa) mais leurs performances électrochimiques restent faibles. Il faut maintenir une productivité (intensité appliquée par tube de l'ordre de 3 A) faible pour assurer la stabilité de la cellule au cours du temps. En effet, on a observé une dégradation très rapide du potentiel de cellule, lorsque l'on essayait de se maintenir à un niveau de productivité satisfaisant, à savoir plus élevé (5 à 7 A, soit 0,05 à 0 07 A /cm$^2$).

La demanderesse est partie de l'hypothèse, suite aux observations des cellules après fonctionnement, que la

2

faible productivité observée (densité de courant appliquée inférieure à 50 mA / cm$^2$ pour des températures supérieures à 800 °C) et la dégradation du potentiel de cellule observée si la productivité était multipliée par un facteur 1,5 étaient les conséquences d'une mauvaise architecture de la cellule utilisée

On entend par architecture, les structures et microstructures des différents matériaux constituant la membrane céramique, à savoir l'électrolyte solide (YSZ 8% mol., zircone stabilisée à l'yttrium), l'électrode (LSM : manganite de lanthane dopé au strontium) et le collecteur de courant (laque d'argent ou cermet argent/céramique oxyde ou non côté cathodique; laque d'or côté anodique).

On entend par structure, le système d'empilements choisi ainsi que l'ordre des différents dépôts pour élaborer une cellule électrochimique (électrolyte solide / électrode / collecteur de courant) ainsi que les formes géométriques (tube, plaque) des membranes.

On entend par microstructure, les épaisseurs, les compacités, les surfaces et rugosités développées au niveau des différents matériaux caractérisant la membrane, les tailles et morphologies des grains et/ou des particules des divers matériaux, les porosités inter et intra granulaires de l'électrolyte solide, la nature (morphologie) de la surface de l'électrolyte solide, les porosités et empilements de particules des différents dépôts (électrode, collecteur de courant).

Elle a supposé que l'absence de porosité dans le collecteur de courant à base d'or, pouvait limiter la diffusion et/ou la dissolution dans cette couche, de l'oxygène gazeux "recombiné" côté anodique, induire une surtension élevée et, par conséquent, une productivité réduite.

De plus, la demanderesse a également observé que, lorsque les cellules utilisées jusqu'alors, fonctionnaient sous une densité de courant plus élevée afin d'atteindre une productivité plus élevée (0,05-0,07 A/cm$^2$ contre 0,03-0,04 A/cm$^2$), les dépôts électrode/collecteur de courant anodique à base de laque d'or se décollaient de la surface externe de la membrane (côté anodique : production d'oxygène, pression élevée > 100 bars) mais également qu'il y avait aussi un décollement des interfaces électrode / électrolyte solide.

Elle a aussi supposé que l'augmentation de la productivité induisant un dégagement gazeux d'oxygène plus important, ce gaz ne pouvait pas s'évacuer rapidement du fait de l'absence de porosité dans la couche collecteur de courant anodique était donc une des causes de ces décollements qui pouvaient en plus être favorisés par les faibles forces d'adhérence et les faibles interactions entre l'électrolyte solide, les couches d'électrode LSM et la couche d'or en raison de température de frittage faible (< 850 °C) nécessitée par la présence côté cathodique d'argent et du co-frittage de l'unité lors de sa fabrication.

La demanderesse a donc cherché un moyen d'augmenter la productivité de cellule haute pression et d'arrêter la dégradation décrite ci-dessus en agissant sur les causes supposées.

C'est pourquoi l'invention a pour objet une membrane céramique conductrice par ions oxyde, caractérisée en ce qu'elle comprend un volume fini non nul d'épaisseur totale non nulle E, comprenant :

a) une couche dense (CD) d'un électrolyte solide ayant, à la température d'électrolyse, une structure cristalline conductrice par ions oxyde, d'épaisseur non nulle $e_0$ et de surfaces externes opposées $S_0$ et $S'_0$ identiques ou différentes,

b) une couche dite d'accrochage (CA), possédant, soit une structure cristalline conductrice par ions oxyde, soit une structure cristalline conductrice mixte, soit un mélange des deux structures cristallines précitées, plaquée sur la surface $S_0$ de la couche dense (CD), ayant une épaisseur $e_1$ non nulle, une surface externe $S_1$, une surface spécifique $s_{1\omega}$ et une rugosité $R_1$,

c) d'une cathode poreuse (EP) et d'une anode poreuse (EP'), conductrices mixtes, de compositions chimiques identiques ou différentes, plaquées, l'une sur la surface $S_1$ de (CA) et l'autre sur la surface $S'_0$ de (CD), lesdites électrodes ayant respectivement des surfaces externes $S_2$ et $S'_2$ non nulles, identiques ou différentes et des épaisseurs non nulles $e_2$, et $e'_2$, identiques ou différentes, et

d) d'un collecteur de courant cathodique (CC) et d'un collecteur de courant anodique (CC'), de compositions chimiques identiques ou différentes, plaqués respectivement sur les surfaces $S_2$ et $S'_2$ de (EP) et (EP'), lesdits collecteurs (CC) et (CC'), ayant respectivement des surfaces externe $S_3$ et $S_3'$ non nulles, identiques ou différentes et des épaisseurs non nulles, $e_3$ et $e'_3$, identiques ou différentes,

e) d'une couche poreuse de revêtement (ER) constituée d'un matériau ou d'un mélange de matériaux, chimiquement compatible avec les matériaux, ou les mélanges de matériaux, desdits électrodes, collecteurs de courant, couche d'accrochage et électrolyte solide, dont la température de frittage est très proche des températures de frittage des matériaux, ou des mélanges de matériaux constituant lesdits desdits électrodes, collecteurs de courants, couche d'accrochage et électrolyte solide, ladite couche (ER) étant plaquée sur la surface $S_3$ de (CC), et éventuellement

f) d'une couche poreuse de revêtement (ER') constituée d'un matériau ou d'un mélange de matériaux, chimiquement compatible avec les matériaux, ou les mélanges de matériaux, desdits électrodes, collecteurs de courants et électrolyte solide, dont la température de frittage est très proche des températures de frittage des matériaux, ou des mélanges de matériaux constituant lesdits desdits électrodes, collecteurs de courants, couche d'accrochage et électrolyte solide, ladite couche (ER') étant plaquée sur la surface $S_3'$ de (CC'), ladite couche de revêtement ayant

une surface $S_4$, et une épaisseur $e_4$ non nulle,

et caractérisée en ce que l'épaisseur E du volume de ladite membrane, est égale à la somme des épaisseurs de chacun des éléments cités.

Selon un premier aspect particulier, l'invention a pour objet une membrane telle que définie ci-dessus, dans laquelle le volume fini d'épaisseur E, comprend une deuxième couche d'accrochage (CA'), possédant, soit une structure cristalline conductrice par ions oxyde, soit une structure cristalline conductrice mixte, soit un mélange des deux structures cristallines précitées, plaquée sur la surface $S'_0$ de la couche dense (CD), et sur la surface externe $S'_1$ de laquelle, est plaquée l'électrode (EP'), ladite couche (CA') ayant une épaisseur $e'_1$ non nulle, une surface spécifique $s'_{1\omega}$ et une rugosité $R'_1$,

Selon un deuxième aspect particulier, l'invention a pour objet une membrane telle que définie ci-dessus, dans laquelle le volume fini d'épaisseur E, ne comprend pas de couche poreuse de revêtement (ER').

Dans la membrane telle que définie ci-dessus, le volume fini d'épaisseur E, peut comprendre aussi une couche intermédiaire ($Cl_{23}$) constituée de matériaux issus de la cathode (EP) et du collecteur de courant (CC), ladite couche ($Cl_{23}$) ayant un coefficient d'expansion thermique ($CET_{23}$) de valeur comprise entre celui, $CET_2$, de (EP) et celui, $CET_3$, de (CC) et de préférence supérieur au $CET_2$ et inférieur à $CET_3$, plaquée sur la surface $S_2$ de (EP) et sur la surface externe $S_{23}$ de laquelle, est plaqué le collecteur (CC), ladite couche $Cl_{23}$ ayant une épaisseur $e_{23}$ non nulle, une surface spécifique $S_{23\omega}$ et une rugosité $R_{23}$.

Il peut comprendre aussi une deuxième couche intermédiaire ($Cl'_{23}$) constituée de matériaux issus de l'anode (EP') et du collecteur de courant (CC'), ladite couche ($Cl'_{23}$) ayant un coefficient d'expansion thermique ($CET'_{23}$) de valeur comprise entre celui, $CET'_2$, de (EP') et celui, $CET'_3$, de (CC') et de préférence supérieur au $CET'_2$ et inférieur à $CET'_3$, plaquée sur la surface $S'_2$ de (EP') et sur la surface externe $S'_{23}$ de laquelle, est plaqué le collecteur (CC'), ladite couche $Cl'_{23}$ ayant une épaisseur $e'_{23}$ non nulle, une surface spécifique $s'_{23\omega}$ et une rugosité $R'_{23}$.

Il peut comprendre aussi une couche intermédiaire ($Cl_{34}$) constituée de matériaux issus du collecteur de courant (CC) et de la couche de revêtement (ER), ladite couche ($Cl_{34}$) ayant un coefficient d'expansion thermique ($CET_{34}$) de valeur comprise entre celui, $CET_3$, de (CC) et celui, $CET_4$, de (ER) et de préférence supérieur au $CET_3$ et inférieur à $CET_4$, plaquée sur la surface $S_3$ de (CC) et sur la surface externe $S_{34}$ de laquelle, est plaquée la couche de revêtement (ER), ladite couche $Cl_{34}$ ayant une épaisseur $e_{34}$ non nulle, une surface spécifique $s_{34\omega}$ et une rugosité $R_{34}$.

Il peut comprendre enfin une deuxième couche intermédiaire ($Cl'_{34}$) constituée de matériaux issus du collecteur de courant (CC') et de la couche de revêtement (ER'), ladite couche ($Cl'_{34}$) ayant un coefficient d'expansion thermique ($CET'_{34}$) de valeur comprise entre celui, $CET'_3$, de (EP') et celui, $CET'_4$, de (ER') et de préférence supérieur au $CET'_3$ et inférieur à $CET'_4$, plaquée sur la surface $S'_3$ de (CC') et sur la surface externe $S'_{34}$ de laquelle, est plaquée la couche de revêtement (ER'), ladite couche $Cl'_{34}$ ayant une épaisseur $e'_{34}$ non nulle, une surface spécifique $s'_{34\omega}$ et une rugosité $R'_{34}$.

Comme l'illustrent les exemples décrits plus loin dans la présente description, le rôle de la ou des surfaces spécifiques et rugosités développées sur les faces $S_0$ et $S'_0$ de l'électrolyte solide est de permettre une meilleure "accroche" des dépôts sus-jacents successifs, électrodes, collecteurs de courant et couches protectrice, de multiplier "en volume" les points "triples" en délocalisant les réactions de réduction et d'oxydation de l'oxygène, pour aboutir à une amélioration des performances électrochimiques des cellules et de limiter les phénomènes de dégradation pouvant apparaître dans les conditions de fonctionnement, au cours du temps dus notamment à l'évacuation de l'oxygène produit et à l'effet Joule.

Par structure cristalline conductrice par ions oxyde on entend, dans le cadre de la présente invention, toute structure cristalline qui, à la température d'utilisation, se présente sous forme d'un réseau cristallin possédant des lacunes en ions oxydes. Les structures cristallines associées peuvent être par exemple, des phases cubique, fluorite, pérovskite, Brown - millerite, dites d'Aurivillius ou encore celles citées dans : J.C. Boivin et G. Mairesse, Chem. Mat., 1998, pp2870-2888; "Recent Material Developments in Fast Oxide Ion Conductors".

Par matériau ou mélange de matériaux, compatible chimiquement avec celui de l'électrolyte solide, des électrodes ou des collecteurs de courant, on désigne dans le présent exposé, tout matériau ou mélange de matériaux, qui, à une température de frittage comprise environ entre 600°C et 1200°C, n'entre pas en réaction chimique avec celui ou ceux de la couche qu'il revêt. Une telle réaction chimique serait éventuellement mise en évidence par l'apparition d'un ou plusieurs composés chimiques absents des matériaux ou des mélanges de matériaux initiaux.

Par poreuses, on indique dans le présent exposé, que les couches de matériaux concernées doivent être capables de laisser diffuser le dioxygène. De façon générale, leur indice de porosité est compris entre 10% et 70%, plus précisément entre 30 et 60 %.

Par surface spécifique de la couche dite "d'accrochage" on indique que la surface spécifique développée par ladite couche est comprise entre 0,01 et 500 $m^2/g$, plus précisément entre 0,1 et 50 $m^2/g$.

Par rugosité de la couche dite "d'accrochage" on indique que la rugosité de ladite couche est comprise entre 0 et 500 $\mu m$ et plus particulièrement entre 10 et 300 $\mu m$.

Par conductrices mixtes, on indique dans le présent exposé, que les couches de matériaux concernés sont des conducteurs ioniques et électroniques.

Par températures de frittage très proches, on indique que la différence entre les températures de frittage de la couche dite "d'accrochage" et de l'électrolyte solide, de la couche intermédiaire et des couches sous et sus-jacentes et de la couche poreuse de revêtement et du collecteur de courant est inférieure ou égale à environ 500 °C, préférentiellement inférieure à 300 °C. En effet, lorsque cette différence devient trop importante, on observe un phénomène de délaminage entre les dépôts, signe d'une mauvaise adhérence des couches frittées. Le développement de la surface spécifique/rugosité en surface de l'électrolyte solide doit permettre une meilleure adhérence / accrochage des divers dépôts successifs et éviter de fait les phénomènes de délaminage et d'écaillage des couches poreuses successives.

Selon un troisième aspect particulier, l'invention a pour objet une membrane telle que définie ci-dessus, caractérisée en ce que $e_2 = e'_2$.

Selon un quatrième aspect particulier, l'invention a pour objet une membrane telle que définie ci-dessus, caractérisée en ce que $e_3 = e'_3$.

Selon un cinquième aspect particulier, l'invention a pour objet une membrane telle que définie ci-dessus, caractérisée en ce que $e_1 = e'_1$.

Selon un sixième aspect particulier, l'invention a pour objet une membrane telle que définie ci-dessus, caractérisée en ce que $e_{23} = e'_{23}$.

Selon un septième aspect particulier, l'invention a pour objet une membrane telle que définie ci-dessus, caractérisée en ce que $e_{34} = e'_{34}$.

Selon un huitième aspect particulier, l'invention a pour objet une membrane telle que définie ci-dessus, caractérisée en ce que $e_4 = e'_4$.

Dans la membrane céramique, objet de la présente invention, l'épaisseur $e_0$ est en général comprise entre environ 0,01 mm et environ 2 mm et plus particulièrement entre environ 0,05 mm et environ 1 mm, les épaisseurs $e_1$ et $e'_1$ sont est en général comprises environ entre 1 $\mu$m et 500 $\mu$m et plus particulièrement entre 10 $\mu$m et 300 $\mu$m, les épaisseurs $e_2$ et $e'_2$ sont en général comprises entre environ 1 $\mu$m et environ 500 $\mu$m et plus particulièrement entre environ 10 $\mu$m et environ 300 $\mu$m, les épaisseurs $e_3$ et $e'_3$ sont en général comprises entre environ 1 $\mu$m et environ 500 $\mu$m et plus particulièrement entre environ 10 $\mu$m et environ 300 $\mu$m, les épaisseurs $e_4$ et $e'_4$ sont en général comprises entre environ 1 $\mu$m et environ 500 $\mu$m et plus particulièrement entre environ 10 $\mu$m et environ 300 $\mu$m, les épaisseurs $e_{23}$ et $e'_{23}$ sont en général comprises entre environ entre 1 $\mu$m et environ 500 $\mu$m et plus particulièrement entre environ 10 $\mu$m et environ 300 $\mu$m et, les épaisseurs $e_{34}$ et $e'_{34}$ sont en général comprises entre environ entre 1 $\mu$m et 500 $\mu$m et plus particulièrement entre 10 $\mu$m et 300 $\mu$m.

La membrane céramique, objet de la présente invention peut consister en une plaque de surface plane S et d'épaisseur E et caractérisée en ce que chacune des surfaces $S_0$, $S'_0$, $S_1$, $S_2$, $S'_2$, $S_3$, $S'_3$, $S_4$ et le cas échéant, $S'_1$, $S'_4$, $S_{23}$, $S'_{23}$, $S_{34}$ et $S'_{34}$, est égale à S. Dans ce cas, la longueur L de la plaque est en général comprise entre environ 1 cm et environ 1 m et plus particulièrement, entre 5 cm et environ 50 cm et sa largeur I, comprise entre environ 1 cm et environ 1 m et plus particulièrement entre 5 cm et environ 50 cm.

La membrane objet de la présente invention peut avoir aussi une forme tubulaire ouverte aux deux extrémités ou seulement à l'une de ses extrémités. Elle consiste alors en un cylindre creux ouvert à ses deux extrémités ou seulement à l'une d'entre elles, de diamètre extérieur D et de diamètre intérieur d et est caractérisée n ce que la couche de support est la couche dense (CD) de l'électrolyte solide, en ce que les surfaces $S_0$, $S'_0$, $S_1$, $S_2$, $S'_2$, $S_3$, $S'_3$, $S_4$ et le cas échéant, $S'_1$, $S'_4$, $S_{23}$, $S'_{23}$, $S_{34}$ et $S'_{34}$, sont cylindriques et coaxiales et en ce que l'épaisseur E est de la membrane est égale à la moitié de la différence (D - d). Dans ce cas, sa longueur L est comprise environ entre 1 cm et environ 1 m et plus particulièrement entre 10 cm et 50 cm.

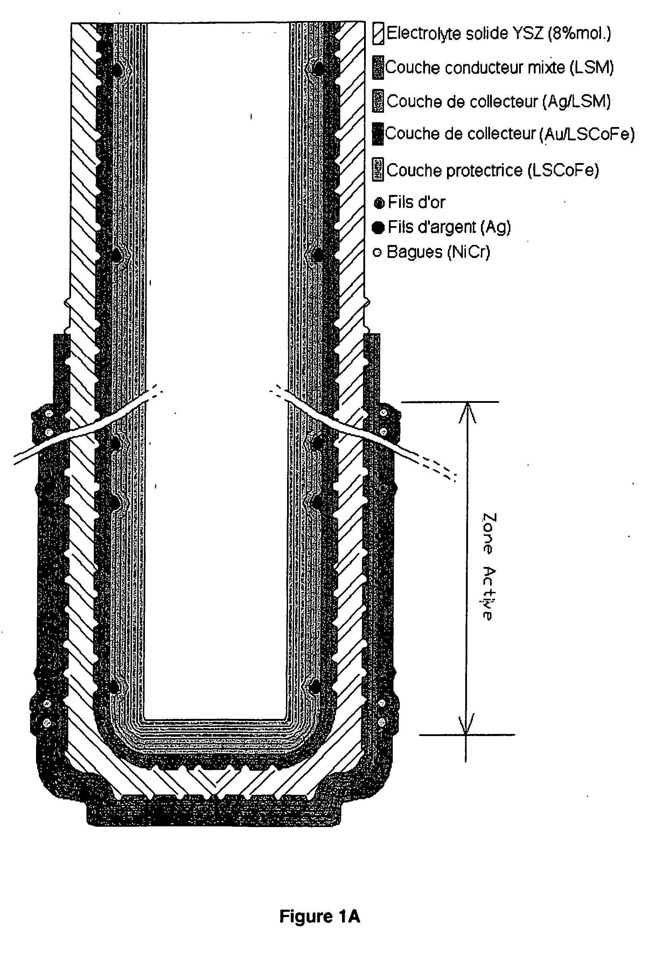

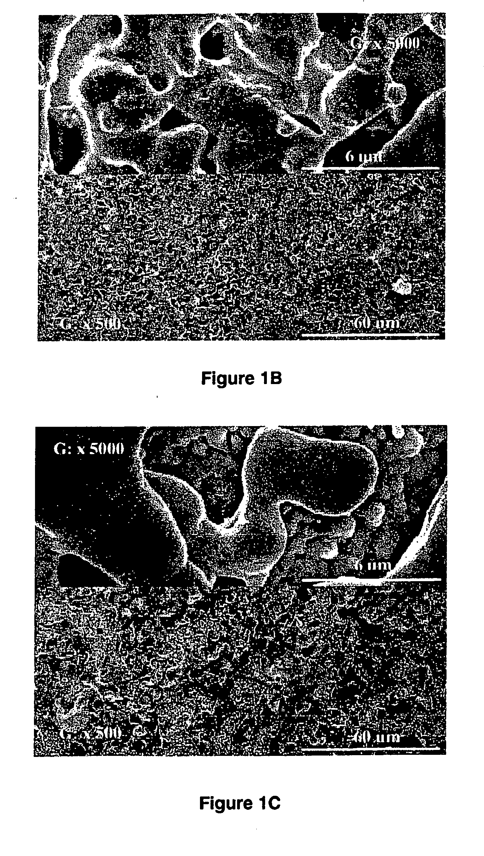

Selon un neuvième aspect particulier, l'invention a pour objet une membrane telle que définie ci-dessus, de forme tubulaire, consistant en un cylindre creux ouvert à une seule de ses deux extrémités, dans lequel la cathode (EP) et le collecteur de courant cathodique (CC) et la couche poreuse de revêtement (ER), sont disposés sur la paroi interne dudit cylindre et l'anode (EP') et le collecteur de courant anodique (CC'), sont disposé sur la paroi externe dudit cylindre. Une telle disposition est illustrée par la figure 1A.

L'électrolyte solide (CD), mis en oeuvre dans la membrane céramique objet de la présente invention, est généralement choisi parmi les oxydes céramiques dopés qui, à la température d'utilisation, se présentent sous forme d'un réseau cristallin lacunaire en ions oxydes. Ils possèdent plus particulièrement une structure fluorite et sont de préférence choisis parmi les composés de formule (I) :

$$(M_\alpha O_\beta)_{1-x} (R_\gamma O_\delta)_x \qquad (I)$$

dans laquelle M représente au moins un atome trivalent ou tétravalent choisi parmi Bi, Ce, Zr, Ga, Th ou Hf, $\alpha$ et $\beta$ sont tels que la structure $M_\alpha O_\beta$ est électriquement neutre, R représente au moins un atome divalent ou trivalent choisi parmi Mg, Ca, Ba, Sr, Gd, Sc, Yb, Y, Sm ou La, $\gamma$ et $\delta$ sont tels que la structure $R_\gamma O_\delta$ est électriquement neutre, x est généralement compris entre 0,05 et 0,30 et plus particulièrement, entre 0,075 et 0,15.

Un électrolyte solide peut consister, par exemple, en un seul oxyde $MO_2$ associé à un ou à plusieurs oxydes $R_\gamma O_\delta$ ou bien en un mélange d'oxydes $MO_2$ associé à un ou à plusieurs oxydes $R_\gamma O_\delta$.

Comme oxydes céramiques de formule $M_\alpha O_\beta$, il y a principalement l'oxyde de zirconium ($ZrO_2$) l'oxyde de cérium ($CeO_2$) l'oxyde d'hafnium ($HfO_2$), l'oxyde de thorium ($ThO_2$), l'oxyde de gallium ($Ga_2O_3$) ou l'oxyde de bismuth ($Bi_2O_3$). Ces oxydes sont dopés avec un ou plusieurs oxydes choisis généralement parmi l'oxyde de magnésium (MgO), l'oxyde de calcium (CaO), l'oxyde de baryum (BaO), l'oxyde de strontium (SrO), l'oxyde de gadolinium ($Gd_2O_3$), l'oxyde d'erbium ($Er_2O_3$), l'oxyde d'indium ($In_2O_3$), l'oxyde de niobium ($Nb_2O_3$), l'oxyde de scandium ($Sc_2O_3$), l'oxyde d'ytterbium ($Yb_2O_3$), l'oxyde d'yttrium ($Y_2O_3$), l'oxyde de samarium ($Sm_2O_3$) et l'oxyde de lanthane ($La_2O_3$).

Comme principaux exemples d'électrolyte solide, il y a les zircones (oxydes de zirconium), les gallathes (matériaux à base d'oxyde de gallium), les matériaux de type BiMeVOx ou les oxydes de cérium stabilisés.

Selon un dixième aspect particulier, l'invention a pour objet une membrane telle que définie ci-dessus, caractérisée en ce que l'électrolyte solide est l'oxyde de zirconium stabilisé à l'oxyde d'yttrium de formule (Ia) :

$$(ZrO_2)_{1-x}\ (Y_2O_3)_x \qquad\qquad (Ia)$$

dans laquelle x est compris entre 0,05 et 0,15 (appelé par la suite YSZ (x en % molaire). Ces composés travaillent à des températures comprises entre 700 et 1000 °C.

Les électrodes (EP) et (EP'), associées à l'électrolyte solide, de compositions chimiques identiques ou différentes, sont notamment en un matériau ou en un mélange de matériaux de structure pérovskites ($ABO_3$) ou proches (pyrochlores ($A_2B_2O_7$), brown-millerite ($A_2B_2O_5$)) ou BiMeVOx (phases d'Aurivillius).

Les matériaux pérovskites, principaux matériaux d'électrodes, sont représentés par la formule (II) :

$$M_1M_2O_3, \qquad\qquad (II)$$

dans laquelle, $M_1$ représente un ou plusieurs atomes choisis dans les familles des alcalino terreux, des lanthanides et des actinides et plus particulièrement parmi La, Ce, Pr, Nd, Pm, Sm, Eu, Gd, Tb, Dy, Ho, Er, Tm, Yb, Lu, Y, ou les Mg, Ca, Sr ou Ba, $M_2$ représente un ou plusieurs atomes choisis parmi les métaux de transition, plus particulièrement parmi Sc, Ti, V, Cr, Mn, Fe, Co, Ni, Cu ou Zn.

Selon un onzième aspect particulier, l'invention a pour objet une membrane telle que définie ci-dessus, caractérisée en ce que les électrodes, de compositions identiques ou différentes, sont plus particulièrement choisies parmi l'oxyde de lanthane et de nickel ($LaNiO_3$), les manganites - lanthane - calcium ($Ca_uLa_vMnO_w$), les manganites - lanthane - strontium ($La_uSr_vMnO_w$), les cobaltites - lanthane - strontium ($La_uSr_vCoO_w$), les cobaltites - lanthane - calcium ($Ca_u$-$La_vCoO_w$), les cobaltites - gadolinium - strontium ($Gd_uSr_yCoO_w$), les chromites - lanthane - strontium ($La_uSr_vCrO_w$), les ferrites - lanthane - strontium, ($La_uSr_vFeO_w$) ou les ferrocobaltites - lanthane - strontium ($La_uSr_vCo_dFe_cO_w$), dans lesquels u + v et c + d sont égaux à 1 et w est tel que la structure considérée est électriquement neutre.

Les couches (CA) et le cas échéant (CA'), développées de part et d'autre de la membrane céramique sont de composition identique ou différente de celle de la couche dense (CD) de l'électrolyte solide défini ci-dessus.

L'invention a de préférence pour objet une membrane céramique, telle que définie précédemment, dans laquelle les couches (CA) et CA') sont de composition chimique identique à celle de la couche dense (CD) d'électrolyte solide.

Dans ce cas et selon un douzième aspect particulier, l'invention a pour objet une membrane céramique, telle que définie ci-dessus, caractérisée en ce qu'elle comprend un volume fini non nul d'épaisseur totale non nulle E, comprenant :

a) une couche d'un électrolyte solide à gradient continu de porosité superficielle contrôlé (CE), ayant, à la température d'électrolyse, une structure cristalline conductrice par ions oxydes, d'épaisseur non nulle $e_0 + e_1 + e'_1$ et de surfaces externes opposées $S_1$ et $S'_1$ identiques, de surface spécifique $s_{1\omega}$ et $s'_{1\omega}$ identiques et de rugosité $R_1$ et $R'_1$ identiques.

b) d'une cathode poreuse (EP) et d'une anode poreuse (EP'), conductrices mixtes, de compositions chimiques identiques ou différentes, plaquées, l'une sur la surface $S_1$ de (CA) et l'autre sur la surface $S'_0$ de (CD), lesdites électrodes ayant respectivement des surfaces externes $S_2$ et $S'_2$ non nulles, identiques ou différentes et des épaisseurs non nulles $e_2$, et $e'_2$, identiques ou différentes, et

c) d'un collecteur de courant cathodique (CC) et d'un collecteur de courant anodique (CC'), de compositions chimiques identiques ou différentes, plaqués respectivement sur les surfaces $S_2$ et $S'_2$ de (EP) et (EP'), lesdits collecteurs (CC) et (CC'), ayant respectivement des surfaces externe $S_3$ et $S_3'$ non nulles, identiques ou différentes et des épaisseurs non nulles, $e_3$ et $e'_3$, identiques ou différentes,

d) d'une couche poreuse de revêtement (ER) constituée d'un matériau ou d'un mélange de matériaux, chimiquement compatible avec les matériaux, ou les mélanges de matériaux, desdits électrodes, collecteurs de courant, couche d'accrochage et électrolyte solide, dont la température de frittage est très proche des températures de frittage des matériaux, ou des mélanges de matériaux constituant lesdits desdits électrodes, collecteurs de courants, couche d'accrochage et électrolyte solide, ladite couche (ER) étant plaquée sur la surface $S_3$ de (CC), et éventuellement

e) d'une couche poreuse de revêtement (ER') constituée d'un matériau ou d'un mélange de matériaux, chimiquement compatible avec les matériaux, ou les mélanges de matériaux, desdits électrodes, collecteurs de courants et électrolyte solide, dont la température de frittage est très proche des températures de frittage des matériaux, ou des mélanges de matériaux constituant lesdits desdits électrodes, collecteurs de courants, couche d'accrochage et électrolyte solide, ladite couche (ER') étant plaquée sur la surface $S_3'$ de (CC'), ladite couche de revêtement ayant une surface $S_4'$, et une épaisseur $e_4'$ non nulle,

et caractérisée en ce que l'épaisseur E du volume de ladite membrane, est égale à la somme des épaisseurs de chacun des éléments cités

La composition des couches d'accrochage (CA) et le cas échéant (CA'), peut également être un mélange des divers matériaux constituant la membrane céramique, à savoir l'électrolyte solide, les électrodes, les collecteurs de courant et la ou les couches protectrices, Dans ce cas, la composition des couches d'accrochage (CA) et le cas échéant (CA') sont de préférence soit en un mélange des matériaux constituant l'électrolyte solide et les électrodes (EP) et (EP'), soit en un mélange une mélange des matériaux constituant les électrodes (EP) et (EP') et tout particulièrement en un mélange de composés de formule (Ia) et de formule (II). Les couches d'accrochage (CA) et le cas échéant (CA') sont dans ce dernier cas, de composition chimique identiques ou différentes.

Les collecteurs de courant (CC) et (CC'), plaqués sur lesdites deux électrodes poreuses (EP) et (EP'), de compositions chimiques identiques ou différentes. et constitués essentiellement, soit par un métal, soit par une laque de métal et plus particulièrement une laque de platine, une laque de palladium, d'or ou une laque d'argent, soit par un mélange métal / céramique "oxyde inerte", plus particulièrement un mélange métal / alumine, soit par un mélange métal / céramique oxyde "conducteur mixte", et plus particulièrement un mélange métal / matériau pérovskite, soit par un mélange métal / céramique oxyde "conducteur ionique" et plus particulièrement un mélange métal / zircone stabilisée à l'yttrium (8% mol.), soit par un mélange métal / céramique oxyde "conducteur électronique" et plus particulièrement un mélange métal / oxyde de nickel, soit par un mélange métal / carbure et plus particulièrement un mélange métal / carbure de silicium, soit par un mélange métal / nitrure et plus particulièrement un mélange métal / nitrure de silicium, soit par un mélange d'un ou de plusieurs des mélanges définis précédemment. Les collecteurs de courant (CC) et (CC'), de compositions identiques ou différentes, sont, plus particulièrement, en un mélange d'un métal choisi, soit parmi les métaux de transition, tels que par exemple, l'argent, le cuivre ou le nickel, soit parmi les métaux nobles tels que l'or, le platine ou le palladium avec ou bien un ou plusieurs composés de formule (I) telle que définie précédemment ou bien avec un ou plusieurs composés de formule (II) telle que définie précédemment.

Le collecteur de courant peut également être défini comme étant issu d'un ou de plusieurs des mélanges définis ci-dessus dans lequel ou dans lesquels des agents porogènes ont été ajoutés ou non lors de la phase de synthèse.

Par agent porogène, on désigne tout matériau susceptible d'être éliminé par décomposition thermique lors de l'étape de déliantage préalable au frittage, en laissant des pores dans le matériau obtenu à l'issue de cette étape et sans laisser de résidus. Comme porogènes, on préfère les polymères existant sous forme particulaire et de forme relativement isotrope comme, par exemple, les cires de polypropylène micronisées (par exemple, PropylTex™270S ou PropylTex™325S de MICRO POWDERS, Inc.) des polyamides (par exemple ORGASOL™ de ELF-ATOCHEM), des latex, du polytétrafluoroéthylène, des sphères de polystyrène. Comme porogènes, on utilise également des fibres de cellulose (par exemple AR-BOCEL™BE600-10 de Rettenmeier), des amidons (par exemple amidon de maïs standard, amidon de blé standard SP ou fécule de pomme de terre de ROQUETTE FRERES, amidon de riz REMYRISE™DR de REMY) ou du graphite.

Il peut également s'agir de fils collecteurs de courant à base de matériaux oxydables, recouverts de matériaux ou d'alliages dits inoxydables, tels que par exemple, une fine couche d'or, d'argent ou de platine ou d'un mélange de deux ou trois de ces éléments.

Les contraintes liées aux matériaux collecteurs de courant côté anodique sont principalement, outre des propriétés physico-chimiques appropriées (conductivité électrique, coefficient d'expansion thermique, résistance mécanique, stabilité chimique, ...) une stabilité sous pression d'oxygène élevée (> 50 bars).

Selon un treizième aspect particulier de la présente invention, le collecteur de courant cathodique (CC) est soit en un mélange d'argent et de zircone dopée à l'oxyde d'yttrium, de préférence YSZ(8%), soit en un mélange d'argent avec un ou plusieurs composés de formule (II), de préférence le manganite de lanthane dopé au strontium (LSM) et tout particulièrement $La_{0,9}Sr_{0,1}MnO_{3-\delta}$, soit en un mélange d'argent, de céramique "conductrice ionique" et de céramique "conductrice mixte" et de préférence le mélange Ag-YSZ(8%)-LSM

Selon un quatorzième aspect particulier de la présente invention, le collecteur de courant anodique (CC') est soit un dépôt d'or poreux, soit en un mélange d'or et de zircone dopée à l'oxyde d'yttrium, de préférence YSZ(8%), soit en un mélange d'or avec un ou plusieurs composés de formule (II), de préférence le manganite de lanthane dopé au strontium (LSM) et tout particulièrement $La_{0,9}Sr_{0,1}MnO_{3-\delta}$, ou la ferrocobaltite de lanthane dopé au strontium (LSCoFe) et tout particulièrement $La_{0,8}Sr_{0,2}Co_{0,8}Fe_{0,2}O_w$.

La couche de revêtement (ER) et le cas échéant, la couche de revêtement (ER'), sont de compositions identiques ou différentes. Elles peuvent être conductrices mixtes, électroniques ou isolantes, tout en étant suffisamment poreuses, pour permettre la diffusion gazeuse de l'oxygène de part et d'autre de la membrane.

Lorsqu'elles sont isolantes, il s'agit par exemple d'un émail.

Lorsqu'elle sont conductrices mixte, il s'agit par exemple d'un matériau pérovskite ou d'un mélange de matériaux pérovskites ou d'un mélange de matériaux pérovskites ou de familles proches (pyrochlores, brown-millerite) et de conducteurs purement ioniques ou d'un mélange de matériaux conducteurs métalliques et d'un ou des composés définis précédemment.

Selon un quinzième aspect particulier, l'invention a pour objet une membrane céramique, telle que définie ci-dessus, dans laquelle la couche de revêtement (ER) et, le cas échéant (ER'), est isolante.

Selon un seizième aspect particulier, l'invention a pour objet une membrane céramique, telle que définie ci-dessus, dans laquelle les couches de revêtement (ER) et, le cas échéant (ER'), sont en des composés ou des mélanges de composés de formule (II) et plus particulièrement en des composés de formule $La_uSr_{-v}Co_dFe_cO_w$, dans lesquels u + v et c + d sont égaux à 1 et w est tel que la structure en cause est électriquement neutre. et de préférence, en un composé de formule (IIa) :

$$La_{0,8}Sr_{0,2}CO_{0,8}Fe_{0,2}O_w \qquad (IIa)$$

dans laquelle w est tel que la structure de formule (IIa), est électriquement neutre.

Selon un dix-septième aspect particulier, l'invention a pour objet une membrane céramique, telle que définie ci-dessus, dans laquelle chacun des collecteurs de courant (CC) et (CC'), est relié à la partie extérieure du circuit, par un fil conducteur électronique, en un métal identique ou différent à celui que lesdits collecteurs comportent et de préférence identique.

Selon une variante de la présente invention, la membrane céramique de surface spécifique/rugosité développée sur l'électrolyte solide, cylindrique telle que définie précédemment, est remplie de billes de mullite ou de zircone ou d'alumine, de façon à améliorer la fixation dudit fil audit collecteur de courant. La nature des billes peut également être de type métallique ou carbure de métal, ou de billes de mullite ou zircone ou d'alumine, recouverte d'une couche de collecteur de courant de même nature ou de nature différente de la couche de collecteur de courant de la cellule électrochimique tubulaire. Les billes peuvent également être de type pérovskite de même composition chimique par exemple que la couche protectrice. Une variante de la présente invention consiste également <u>soit</u> à substituer le fil collecteur de courant interne en Ag et les billes de mullite, de zircone ou d'alumine, par un tube collecteur de courant à base d'argent ayant pour fonction d'assurer une continuité électrique tout le long de la surface cathodique interne et de permettre une arrivée d'air homogène à l'extrémité fermée du tube, <u>soit</u> à maintenir le fil collecteur de courant à base d'argent et à substituer les billes de mullite ou de zircone ou d'alumine, par un tube en quartz afin de permettre une arrivée d'air homogène à l'extrémité fermée du tube.

La membrane céramique de surface spécifique/rugosité développée sur les faces de l'électrolyte solide $S_0$ et $S'_0$, objet de la présente invention, est préparée par des séquences successives consistant en un dépôt d'un matériau donné, disponible dans le commerce, suivie du frittage de l'ensemble résultant, à partir de l'électrolyte solide pris comme matériau de support de ladite membrane et possédant, de part et d'autre, une surface/rugosité développée ou non, de même nature ou non, que le matériau électrolyte solide. Ces séquences d'opérations sont bien connues de l'homme du métier. De façon générale, la membrane céramique électrolyte solide est réalisée en mettant en oeuvre une ou plusieurs techniques classiques de mise en forme céramique, comme par exemples le pressage isostatique à froid, le pressage isostatique à chaud (Hot Isostatic Pressure), l'extrusion, le coulage en bande (tape casting) ou la sérigraphie. Les couches d'accrochage permettant de développer de la surface spécifique et de la rugosité de part et d'autre sur les surfaces $S_0$ et $S'_0$ de l'électrolyte solide sont déposées, <u>soit</u> sur la membrane en cru (avant frittage), <u>soit</u> sur la membrane pré-frittée, <u>soit</u> sur la membrane céramique après frittage.

Le développement de la surface spécifique et de la rugosité consiste à déposer en surface de la membrane céramique un dépôt contenant <u>soit</u> le même matériau que l'électrolyte solide, <u>soit</u> un ou des matériaux constituants la cellule électrochimique, <u>soit</u> un mélange de matériaux constituants la cellule électrochimique.. Les dépôts de cette couche "d'accrochage" sur l'électrolyte solide dense, de forme planaire ou/et tubulaire, sont réalisés par des techniques bien connues de l'homme du métier, à savoir de manière non exhaustive, par pulvérisation d'une suspension de poudre sur l'électrolyte solide (spray), par dépôt d'une suspension de poudre par remplissage/vidage (dip coating), par dépôt d'une suspension de poudre par sérigraphie (screen printing) ou par dépôt d'une suspension de poudre par pinceau (painting).

Après dépôt de la couche dite "d'accrochage", la membrane céramique est <u>soit</u> frittée de manière à obtenir un l'ensemble (CA), (CD) et, le cas échéant (CA'), possédant sur ces surfaces externes $S_1$ et éventuellement $S'_1$ de la surface spécifique ($S_{1\omega}$ et $s'_{1\omega}$) et de rugosité $R_1$ et $R'_1$, <u>soit</u> reçoit directement les couches successives d'électrode, de collecteur de courant et de couche protectrice. Les dépôts successifs (électrode, collecteur de courant, couche protectrice et éventuellement couche(s) intermédiaire(s) entre les divers dépôts pour harmoniser les CET) sont réalisés par peinture (painting), par pulvérisation (spray), par enrobage par immersion (dip coating) ou par sérigrahie (screen printing), que ce soit sur la face interne ou sur la face externe du dispositif. Après le dépôt de chaque couche, on procède au frittage sous air, à la température de frittage dudit matériau, comprise entre 600°C et 1500 °C selon les matériaux, pendant quelques heures, généralement de 0,25 à 10 heures. De même, l'électrolyte solide de surface spécifique/rugosité, membrane céramique de forme géométrique tubulaire, planaire ou elliptique, est préparé à partir de produits commerciaux et est mis en forme selon des méthodes connues de l'homme du métier et décrites précédemment. On entend par surface spécifique une surface comprise entre 0,01 et 500 m$^2$/g, et plus particulièrement entre 0,1 et 50 m$^2$/g. On entend par rugosité R une valeur comprise entre 0 et 500 $\mu$m et plus précisément entre 10 et 300 $\mu$m.

Une variante consiste à réaliser en une seule étape la fabrication de l'électrolyte solide dense possédant une surface spécifique/rugosité en surface. Cette méthode est décrite dans la demande de brevet français N° 00 15919 déposée le 07 décembre 2000. Elle comprend les étapes suivantes :

une étape ($P_a$), de préparation d'une suspension de porogènes (particules, fibres ou plaquettes) solides, ou d'un mélange de porogènes solides de taille et/ou de forme et/ou de nature différentes, dans un solvant en présence si nécessaire, d'un liant et/ou d'un plastifiant, et/ou d'un autre composé organique soluble dans le solvant,
une étape ($P_b$), de coulage de ladite suspension formée à l'étape ($P_a$),
une étape ($P_c$), d'évaporation dudit solvant pour former un substrat porogène poreux,
une étape ($Q_a$), de préparation d'une suspension de particules de céramique solides dans un solvant en présence d'un dispersant,
une étape ($Q_b$), d'addition dans la suspension préparée à l'étape ($Q_a$), d'un liant et éventuellement d'un plastifiant,
une étape ($Q_d$), de désaération de ladite suspension,
une étape (A) d'infiltration du substrat porogène poreux d'épaisseur contrôlée, par la suspension de matériau céramique,
une étape (B) d'évaporation du solvant, pour former une structure composite porogène/céramique solide,
une étape de découpe (B') de la structure composite en éléments de structure ($s_i$),
une étape d'empilement tête-bêche, d'éléments $S_i$ deux par deux, pour former un ensemble (E),
une étape de thermocompression de (E),
une étape (C), de déliantage, et
une étape (D), de frittage.

Selon un avant-dernier aspect de la présente invention, celle-ci a pour objet l'utilisation d'une membrane céramique, telle que définie précédemment, pour séparer l'oxygène de l'air ou d'un mélange gazeux le contenant et plus particulièrement pour produire l'oxygène sous pression élevée, ou non, dans une enceinte fermée. L'oxygène ainsi produit est ultra - pur (pureté > 99,9 %) et il est confiné dans une enceinte fermée et peu être à des pressions comprises entre 50 et 150 x 10$^5$ Pa (entre 50 et 150 bars). Cette application est particulièrement intéressante pour produire de l'oxygène embarqué dans les avions avec des cellules tubulaires fermées à une extrémité, telles que décrites précédemment.

L'invention a aussi pour objet l'utilisation d'une membrane telle que définie précédemment, pour analyser la présence d'oxygène dans une atmosphère gazeuse.

Selon un dernier aspect de la présente invention, celle a pour objet un procédé de préparation d'oxygène ultra - pur consistant en la séparation de l'oxygène de l'air par conduction ionique à travers une membrane céramique, telle que définie précédemment, un procédé d'élimination de l'oxygène d'une atmosphère gazeuse dans laquelle sont effectuées des applications nécessitant des atmosphères à faible teneur en oxygène ou sans oxygène, consistant en la séparation de l'oxygène de ladite atmosphère, par conduction ionique à travers ladite membrane céramique, et un, procédé de production d'énergie thermique et électrique au sein d'une pile à combustible solide, par réaction de l'oxygène et de l'hydrogène, caractérisé en ce que ledit oxygène est obtenu en le séparant de l'air à travers ladite membrane céramique.

Les exemples suivants illustrent l'invention sans toutefois la limiter.

Préparation de la cellule électrochimique.

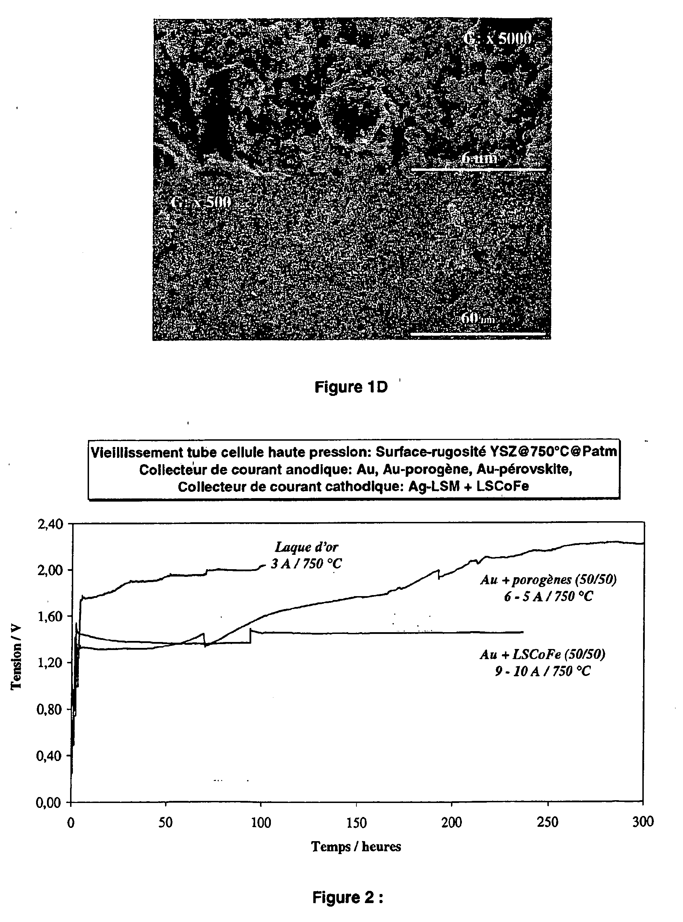

On a analysé les propriétés électrochimiques d'une cellule tubulaire, illustrée par la figure 1, présentant sur ses deux faces S et S' de la surface spécifique/rugosité développée. L'architecture de la cellule tubulaire est décrite sur la figure 1A. L'unité est constituée par :

un électrolyte solide dense YSZ (8% mol.) ayant de part et d'autre des surfaces d'accrochage (CA) et (CA'), de

surface spécifique ($s_\omega$, $s'_\omega$) / rugosité (R, R') de même nature (épaisseurs de dépôt identiques : e' = e"),
une cathode (EP) à base de manganite de lanthane dopé au strontium (LSM), dans ce cas LSM ($La_{0,9}Sr_{0,1}MnO_{3-\square}$),
un collecteur de courant cathodique (CC) à base de cermet Ag / LSM (50 / 50, vol.) recouvert d'une couche dite protectrice (ER) issue de la famille des ferrocobaltite de lanthane, dans ce cas LSCoFe ($La_{0,8}Sr_{0,2}C_{0,8}Fe_{0,2}O_w$),
une anode (EP') à base de manganite de lanthane dopé au strontium (LSM), dans ce cas LSM ($La_{0,9}Sr_{0,1}MnO_{3-\square}$),
un collecteur de courant anodique (CC') (oxygène, pression élevée d'oxygène > 50 bars) est un cermet à base d'or-LSCoFe, sans couche "protectrice"(ER').

Après le dépôt de chaque couche, couches dite "d'accrochage" (CA) et (CA'), électrodes (EP) et (EP'), collecteurs de courant (CC) et (CC'), couche protectrice (ER), le tube a été fritté sous air sous des température comprises entre 800 et 1200 °C, pendant quelques heures, avec des paliers de température compris entre 0,25 heure et 6 heures. Le système n'est pas symétrique en terme de dépôt.
Les épaisseurs moyennes à considérer sont :

couche (CD) [YSZ (8% mol)] : 0.5 à 1.5 mm
couche d'accrochage (CA )et (CA') [YSZ (8% mol.)] électrolyte solide : 10-100 $\mu$m
électrodes (EP) et (EP') (couches LSM); 60-70 $\mu$m;
collecteur de courant cathodique (CC) (Ag-LSM) : 100-120 $\mu$m
collecteur de courant anodique (CC') (Au-LSCoFe) : 50 -100 $\mu$m
couche protectrice (ER) (LSCoFe) : 50 - 90 $\mu$m.

Les figures 1B à 1D représentent les photos MEB des microstructures de divers collecteurs de courant anodique à base d'or de la cellule décrite précédemment en terme de tailles et formes de particules et d'états de surface.
Sur la photo de la figure 1B, le collecteur de courant anodique consiste en une laque d'or ;
Sur la photo de la figure 1C, le collecteur de courant anodique consiste en une laque d'or poreuse issue d'un mélange or / porogène (50 / 50 en volume) ;
Sur la photo de la figure 1D, le collecteur de courant anodique consiste en un mélange laque d'or / pérovskite (LSCoFe) (50 / 50 en volume)
On observe que dans le cas d'un collecteur en laque d'or, il est observé une présence très faible de porosité. L'ajout de 50% volumique d'agents porogènes (amidon de mais : taille des pores de l'ordre de 10 à 15 $\mu$m), induit la formation d'une porosité et l'observation directe de la couche sous jacente (électrode LSM). Cette ouverture de porosité doit permettre, en fonctionnement, l'évacuation de l'oxygène côté anodique. Il est à noter la taille des particules d'or (> 5 $\mu$m).
Dans le cas du cermet or/pérovskite (LSCoFe), on observe une porosité d'empilement au niveau de la pérovskite (LSCoFe), matériau de taille de grains inférieurs au micron permettant non seulement une bonne conductivité mixte ionique - électronique (majoritairement électronique) mais également une évacuation de l'oxygène.

**Exemple 1 : Influence de la structure-microstructure du collecteur de courant anodique de cellules céramiques YSZ (8% mol.) / paramètres de fonctionnement : température 750-780 °C, pression (externe d'oxygène) : 1x10$^5$ Pa (1 bar), intensité : 3-10 A.**

On a préparé plusieurs cellules électrochimiques tubulaires D42PAISSUER 1 mm (Cellule 1 à Cellule 3) constituées:

d'un électrolyte solide en YSZ (8%) (longueur: 350mm, surface active : 68 cm$^2$, diamètre intérieur : 9 mm). Les électrolytes solides, des **Cellules 1** et **2**, ne possèdent pas de couche "d'accrochage" (CA) et (CA') contrairement à celui de la **Cellule 3.**
de deux électrodes (EP) et (EP') en manganite de lanthane dopé au strontium (LSM : $La_{0,9}Sr_{0,1}MnO_x$) (épaisseur : 10-30 $\mu$m, porosité :30-50%),
d'un collecteur de courant cathodique (CC) en cermet Ag / LSM (50/50 en vol.) (épaisseur : 50-70 $\mu$m, porosité entre 30 et 50 %) et
d'une couche "protectrice" (ER), sur la face cathodique de la membrane, en LSCoFe ($La_{0,8}Sr_{0,2}Co_{0,8}Fe_{0,2}O_w$) (épaisseur : 30 $\mu$m ; porosité : 20-70%) (conditions de dépôt : 800 °C/0,25-1 h).
d'un collecteur de courant anodique (CC') consistant
une laque d'or (**Cellule 1**);
une laque d'or poreuse issue d'un mélange or / porogène (50 / 50 en volume) (**Cellule 2**);
un mélange laque d'or / pérovskite (LSCoFe) (50 / 50 en volume) (**Cellule 3**).
les épaisseurs moyennes des dépôts (CC') pour les trois cellules, étant de l'ordre de 50 à 100 $\mu$m.

Les collecteurs de courant à base d'or sont déposés directement sur l'électrode LSM et ne sont pas recouverts d'une couche "protectrice". Dans le cas de l'application haute pression, l'air (cathode) circule en interne du tube fermé à une extrémité. L'oxygène est produit en externe et confiné dans une enceinte fermée afin de pouvoir monter sous pression (50-150 bars).

Les dépôts des différentes couches (électrodes, collecteurs de courant anodique et cathodique, couche protectrice cathodique) sont réalisés par la technique de dépôt remplissage-vidage (dip coating). Les couches d'accrochage (CA) et (CA') sont de même nature que l'électrolyte solide dense (YSZ 8% mol.). Les dépôts interne et externe sont réalisés soit par spray, soit par dip coating sur l'électrolyte solide pré-fritté. La membrane est ensuite frittée avant dépôt des diverses couches.

Les unités tubulaires ont fonctionné en continu pendant au moins 10 jours (250 heures) sous $1 \times 10^5$ Pa (1 bar) d'oxygène à 750 ou 780 °C. La durée de vie des unités est fonction de l'architecture et de la structure-microstructure du collecteur de courant anodique (CC') choisi. Dans tous les cas de figure, le rendement faradique (rapport débit $O_2$ expérimental/débit théorique) est de 100 %.

L'utilisation de la laque d'or aboutit à des performances élevées en terme de potentiel électrochimique (de l'ordre de 1,8-1,9 V, dégradation de 5%/100 h) pour une productivité faible (< 0,05 A/cm$^2$). Ceci, au vu de la figure 1 B, est la conséquence d'une très faible porosité au sein du collecteur de courant anodique ne permettant pas l'évacuation de l'oxygène formée.

L'ajout d'agents porogènes dans le collecteur de courant (taille des particules de l'ordre de 10-15 $\mu$m), pour une productivité multipliée par un facteur 1,6-2 (0,06-0,08 A/cm$^2$), aboutit à un potentiel de cellule plus faible (1,4 V) mais à une dégradation plus élevée (élévation du potentiel de 20 % en 100 h de fonctionnement). L'ouverture de porosité aboutit à une amélioration des performances électrochimiques mais également à un système non stable au cours du temps. Après fonctionnement les unités présentent des phénomènes de délaminage au niveau des interfaces électrode anodique (EP') / collecteur de courant Au-porogène (CC') pouvant s'expliquer soit par une évacuation trop importante de gaz et/ou soit par des effets Joule locaux.

L'unité possédant des couches d'accrochage (CA) et (CA')" et un collecteur de courant anodique (CC') Au / LSCoFe présente une stabilité du potentiel sous fonctionnement (1,4 V, dégradation < 1%/100 h) pour une productivité multipliée par un facteur 3-3,5 (0,14-0,16 A/cm$^2$) par rapport à la laque d'or. Le fait de développer une couche "d'accrochage" sur l'électrolyte solide, de modifier la nature du collecteur de courant (cermet Au / LSCoFe) et de modifier les conditions de frittage des dépôts aboutit à une amélioration des performances électrochimiques (augmentation de la productivité) et une stabilité de l'unité (absence de délaminage de l'interface électrode/collecteur de courant après fonctionnement).

Les résultats sont reportés sur la figure 2 et dans le tableau 1.

La figure 2 représente les fonctions V = f(t) de chacune des cellules 1 à 3 et met en évidence la performance électrochimique sous $P(O_2) = 10^5$ Pa (1 bar), de la cellule 3 comportant des couches d'accrochage sur l'électrolyte solide qui développe ainsi de la surface spécifique et de la rugosité, par rapport aux cellules 1 et 2 qui n'en ont pas, sous $P(O_2) = 1$ bar.

**Tableau 1**

| Cellule | Conditions opératoires | Performances électrochimiques initiales | Dégradation (voltage) |
|---|---|---|---|
| Cellule 1 | 750°C / 1 bar / 100 h | 3 A-0,045 A/cm$^2$ - 1,75 V | 5-10 % / 100 h |
| Cellule 2 | 750 °C / 1 bar / 300 h | 5-6 A - 0,080 A/cm$^2$ - 1,30 V | 20-25 % / 100 h |
| Cellule 3 | 750 °C / 1 bar / 300 h | 9-10 A - 0,15 A/cm$^2$ - 45 V | <1 % / 100 h |

**Exemple 2 : Influence de la structure-microstructure du collecteur de courant anodique de cellules céramiques YSZ (8% mol.) / paramètres de fonctionnement : température 800-830 °C, pression (externe d'oxygène) : 60-150x10$^5$ Pa (60-150 bar), intensité: 3-7 A.**

On a préparé deux cellules électrochimiques tubulaires (Cellule 4 et Cellule 5), constituées :

- d'un électrolyte solide en zircone stabilisée à l'yttrium [YSZ(8%)] de longueur égale à 350 mm, d'épaisseur 0,92 mm, de surface active égale à 68 cm$^2$ et de diamètre intérieur égal à 9 mm), (**Cellule 4 et Cellule 5**)
- de deux couches d'accrochage (CA) et (CA') présentant de la surface spécifique/rugosité en les deux surfaces de l'électrolyte solide YSZ et de même nature et de rugosité R et R' entre 10 $\mu$m et 100$\mu$m (**Cellule 5**)
- de deux électrodes (EP) et (EP') en manganite de lanthane dopé au strontium (LSM : $La_{0.9}Sr_{0.1}MnO_x$), d'épaisseur 15 à 30 $\mu$m, et de porosité de 30 à 50% (**Cellule 4 et Cellule 5**),

- d'un collecteur de courant cathodique (CC) en cermet Ag - LSM (50/50 en vol.) d'épaisseur 120 à 130 $\mu$m, de porosité entre 30 et 50 %) (**Cellule 4 et Cellule 5**),
  d'une couche protectrice (ER) sur la face cathodique de la membrane en LSCoFe (La$_{0.8}$Sr$_{0.2}$Co$_{0.8}$Fe$_{0.2}$O$_w$) d'épaisseur entre 60-80 $\mu$m et de porosité : 20-70% (**Cellule 4 et Cellule 5**) (conditions de dépôt : 800°C / 0,5-2 h).
  d'un collecteur de courant anodique (CC') consistant
  une laque d'or (**Cellule 4**);
  cermet or / LSCoFe (50 / 50 en volume) (**Cellule 5**).

Les dépôts des différentes couches (surface d'accrochage, électrodes, collecteurs de courant, couches protectrices) sont réalisés par la technique de dépôt remplissage-vidage (dip coating).

La température de fonctionnement est de 800-830 °C avec un gradient de température de l'ordre de +/-200 °C sur la zone active.

Les pressions de travail d'oxygène sont comprises entre 120 et 140 bars.

Dans les deux cas, les potentiels de cellule sont stables sous forte pression d'oxygène, 140 x 10$^5$ Pa (140 bars) (**Cellule 4**) et 120 x 10$^5$ Pa (120 bars) (**Cellule 5**). Ils sont de l'ordre de 1,6-1,7 V (**Cellule 4**) et 1,8 V (**Cellule 5**) pour des intensités appliquées de 3,5 A (**Cellule 4**) et 7 A (**Cellule 5**), soit respectivement 0,05 et 0,1 A/cm$^2$.

La **Cellule 5** est stable sous conditions réactionnelles (dégradation < 1 % / 100 h) sous 120 bars.

Contrairement à l'exemple 1 et pour un potentiel équivalent, l'intensité appliquée est plus faible, respectivement 1,4V/10A/P(O$_2$)=1 bar / 750°C pour la **Cellule 3** et 1,8V / 7A / P(O$_2$) = 120bars /800°C pour la **Cellule 5**. Cette différence ne s'explique pas uniquement par la surtension liée à la loi de Nernst. Elle a principalement pour origine, comme signalé ci-dessus, le très mauvais gradient de température dans l'enceinte sous pression (800 +/- 200 °C sur la zone active) contrairement au test sous 1 bar d'oxygène (750 +/-10 °C sur la zone active). Les rendements faradiques sous P(O$_2$) compris entre 120 et 140 x 10$^5$ Pa (120 et 140 bars) sont égaux à 100 % après une centaine d'heures de fonctionnement.

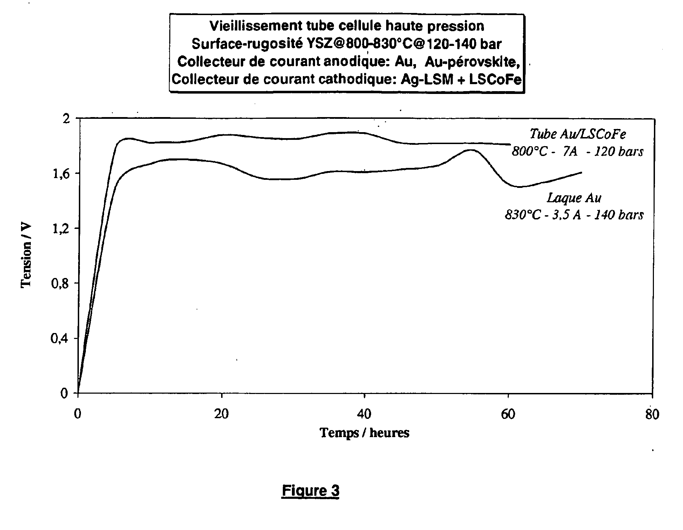

Les résultats sont reportés sur la figure 3 et le tableau 2.

La figure 3 représente les fonctions V = f(t) de chacune des cellules 1 à 3 et met en évidence la performance électrochimique sous P(O$_2$) entre 120 et 140 10$^5$ Pa (1 bar), de la Cellule 5 comportant des couches d'accrochage sur l'électrolyte solide qui développe ainsi de la surface spécifique et de la rugosité, par rapport à la Cellule 4 qui n'en a pas.

**Tableau 2**

| Cellule | Conditions opératoires | Performances électrochimiques initiales | Dégradation (voltage) |
|---------|------------------------|------------------------------------------|------------------------|
| Cellule 4 | 800°C / 140 bars / 70 h | 3,5 A - 0,05 A/cm$^2$ 1,60 V | 1 % /70h |
| Cellule 5 | 750 °C /120 bar /70 h | 7 A - 0,10 A/cm$^2$ 1,80 V | <1 %/70h |

**Conclusion**

Dans les deux exemples décrits ci-dessus, l'emploi de collecteur de courant à base de cermet mëtal/pérovskite, et plus particulièrement Au / LSCoFe en lieu et place de systèmes à base de laque d'or ou d'or / porogène en qualité de collecteur de courant anodique, améliore très nettement les performances électrochimiques des cellules (productivité, potentiel initial) et ralentit très fortement le phénomène de vieillissement et ce pour des pressions d'oxygène comprises entre 1 et 150 x 10$^5$ Pa (1 et 150 bars).

Le développement de surface spécifique/rugosité sur l'électrolyte solide dense permet une meilleure "accroche" des dépôts successifs, principalement pour l'électrode et les collecteurs de courant anodique et cathodique, et multiplie le nombre de points dits en électrochimie "triple" (points de contact entre l'électrolyte solide, l'électrode et le gaz (O$_2$)). Il y a délocalisation de la réaction d'électrode dans le volume et non plus uniquement à l'interface "plane" électrolyte solide/électrode.

Les conséquences du développement de cette couche d'accrochage, particulièrement sur les unités haute pression, de même nature que l'électrolyte solide et/ou l'électrode, combinée avec une structure électrode/collecteur de courant anodique Au /pérovskite ou métal noble/pérovskite, sont multiples :

Stabilisation de la dégradation des cellules à moins de 1% /100 h de fonctionnement sur ces unités pour des densités de courant de l'ordre de 0,15A/cm$^2$ et des températures comprises entre 750 et 800 °C sous pression élevée d'oxygène (1-150 bars),

Conditions de fonctionnement des unités, par rapport aux systèmes "classiques" à membrane céramique sans couche d'accrochage et collecteur de courant anodique de type laque d'or, plus sévères en terme de productivité (x 3-3,5) pour des potentiels initiaux plus faibles,

Maintien de la productivité (rendement faradique) sous 1-150 bars d'oxygène,

pureté de l'oxygène produit supérieure à 99,9 % pour des pressions d'oxygène comprises entre 1 et 150 bars.

A titre d'exemples supplémentaires conduisant aux résultats avantageux décrits ci-dessus, il y a les cellules électrochimiques dans lesquelles :

- Le collecteur de courant anodique (CC') est un cermet à base de métal/pérovskite déposé <u>soit</u> directement sur l'électrolyte solide de surface/rugosité développée, soit déposé sur une électrode. Les matériaux employés dans le collecteur de courant anodique peuvent être de même nature que ceux employés dans la cellule (électrolyte solide, électrode, collecteur de courant cathodique et couche protectrice cathodique) et/ou de nature différente ;
- Les couches d'accrochage (CA) et (CA') développées sur les deux faces de l'électrolyte solide dense sont constituées du même matériau que ce dernier. Il peut toutefois s'agir d'autres matériaux constituants la cellule, principalement de même nature que l'électrode. De manière générale, il peut également s'agir de matériaux de structure cristalline conductrices ioniques (électrolyte solide dense : phases d'Aurivillius, fluorite) et/ou mixtes (phases brown-millerite, pérovskite, pyrochlore) ;
- Les couches d'accrochage (CA) et (CA') sont caractérisées par le fait qu'elles peuvent être, si elles sont de même nature que l'électrolyte solide dense, indissociables de ce dernier. La membrane céramique est caractérisée alors par une membrane possédant sur ses faces de part et d'autre une surface spécifique/rugosité. L'obtention de cette surface d'accrochage peut être atteinte <u>soit</u> à partir, après frittage, d'une membrane céramique, par pressage isostatique par exemple, <u>soit</u> à partir d'une membrane pré-frittée, <u>soit</u> à partir d'une membrane en cru ;
- Les couches intermédiaires ($C_{ij}$) et ($C'_{ij}$) sont définies comme étant constituées de matériaux issus des dépôts sous - et sus-jacents (i) et (j). Le coefficient d'expansion thermique de cette couche est inférieur à celui de la couche sus-jacente et supérieur à celui de la couche sous jacente. La couche d'accrochage peut être définie comme étant une couche intermédiaire entre l'électrolyte solide et l'électrode. Les couches intermédiaires ($C_{ij}$) et ($C'_{ij}$) doivent être suffisamment poreuses et d'épaisseurs contrôlées et ne pas influer sur les performances électrochimiques de la cellule. Elles sont constituées, soit de matériaux conducteurs ioniques, soit de matériaux conducteurs mixtes, soit de matériaux conducteurs électroniques, soit d'un mélange des matériaux pré-cités ;
- la couche protectrice (ER) est constituée d'une pérovskite de type LSCoFe ou autre, possédant des propriétés de conductivité mixte à basse température (<800°C). Il peut également s'agir d'autres structures cristallines conductrices ioniques ou mixtes (phases dites d'Aurivillius, brown-millerite, pyrochlore, fluorite, ...),
- la couche protectrice (ER), dans le cas d'unités pour produire de l'oxygène sous haute pression, n'est pas forcément développée sur le collecteur de courant anodique,
- la couche protectrice (ER) ne possède pas de propriétés de conduction mixte, ionique ou électronique. Il peut s'agir d'un isolant. La couche doit cependant être suffisamment poreuse et d'épaisseur contrôlée pour permettre la diffusion de l'oxygène au sein du système et ne pas influer sur les performances électrochimiques de la cellule,
- des billes de mullite ou de zircone ou d'alumine (diamètre compris entre 0.2 et 1 mm) peuvent remplir le tube de manière à fixer mécaniquement le fil d'argent interne. Ces billes peuvent éventuellement être recouvertes d'une couche de collecteur de courant, de même nature que la couche collecteur de courant déposée sur le système tubulaire (laque d'argent, mélange Argent/LSM (50/50, % vol.), laque d'or, ...),
- le fil d'argent interne peut être fixé, non plus par des billes de mullites ou de zircone ou d'alumine, mais soit par un tube en argent, soit par un tube en quartz permettant l'arrivée de l'air à l'extrémité fermée de l'unité,
- la cellule haute pression peut être <u>soit</u> symétrique en terme de matériaux, architecture et structure-microstructure, <u>soit</u> asymétrique comme dans les exemples 1 et 2.

## Revendications

1. Membrane céramique conductrice par ions oxyde, **caractérisée en ce qu'**elle comprend un volume fini non nul d'épaisseur totale non nulle E, comprenant :

   a) une couche dense (CD) d'un électrolyte solide ayant, à la température d'électrolyse, une structure cristalline conductrice par ions oxyde, d'épaisseur non nulle $e_0$ et de surfaces externes opposées $S_0$ et $S'_0$ identiques ou différentes,
   b) une couche dite d'accrochage (CA), possédant, <u>soit</u> une structure cristalline conductrice par ions oxyde, <u>soit</u> une structure cristalline conductrice mixte, <u>soit</u> un mélange des deux structures cristallines précitées, plaquée sur la surface $S_0$ de la couche dense (CD), ayant une épaisseur $e_1$ non nulle, une surface externe $S_1$, une surface spécifique $s_{1\omega}$ et une rugosité $R_1$,
   c) d'une cathode poreuse (EP) et d'une anode poreuse (EP'), conductrices mixtes, de compositions chimiques identiques ou différentes, plaquées, l'une sur la surface $S_1$ de (CA) et l'autre sur la surface $S'_0$ de (CD), lesdites

électrodes ayant respectivement des surfaces externes $S_2$ et $S'_2$ non nulles, identiques ou différentes et des épaisseurs non nulles $e_2$, et $e'_2$, identiques ou différentes, et

d) d'un collecteur de courant cathodique (CC) et d'un collecteur de courant anodique (CC'), de compositions chimiques identiques ou différentes, plaqués respectivement sur les surfaces $S_2$ et $S'_2$ de (EP) et (EP'), lesdits collecteurs (CC) et (CC'), ayant respectivement des surfaces externe $S_3$ et $S_3'$ non nulles, identiques ou différentes et des épaisseurs non nulles, $e_3$ et $e'_3$, identiques ou différentes,

e) d'une couche poreuse de revêtement (ER) constituée d'un matériau ou d'un mélange de matériaux, chimiquement compatible avec les matériaux, ou les mélanges de matériaux, desdits électrodes, collecteurs de courant, couche d'accrochage et électrolyte solide, dont la température de frittage est très proche des températures de frittage des matériaux, ou des mélanges de matériaux constituant lesdits desdits électrodes, collecteurs de courants, couche d'accrochage et électrolyte solide, ladite couche (ER) étant plaquée sur la surface $S_3$ de (CC), et éventuellement

f) d'une couche poreuse de revêtement (ER') constituée d'un matériau ou d'un mélange de matériaux, chimiquement compatible avec les matériaux, ou les mélanges de matériaux, desdits électrodes, collecteurs de courants et électrolyte solide, dont la température de frittage est très proche des températures de frittage des matériaux, ou des mélanges de matériaux constituant lesdits desdits électrodes, collecteurs de courants, couche d'accrochage et électrolyte solide, ladite couche (ER') étant plaquée sur la surface $S_3'$ de (CC'), ladite couche de revêtement ayant une surface $S'_4$, et une épaisseur $e'_4$ non nulle,

et **caractérisée en ce que** l'épaisseur E du volume de ladite membrane, est égale à la somme des épaisseurs de chacun des éléments cités.

2. Membrane telle que définie à la revendication 1, dans laquelle le volume fini d'épaisseur E, comprend une deuxième couche d'accrochage (CA'), possédant, soit une structure cristalline conductrice par ions oxyde, soit une structure cristalline conductrice mixte, soit un mélange des deux structures cristallines précitées, plaquée sur la surface $S'_0$ de la couche dense (CD), et sur la surface externe $S'_1$ de laquelle, est plaquée l'électrode (EP'), ladite couche (CA') ayant une épaisseur $e'_1$ non nulle, une surface spécifique $s'_{1\omega}$ et une rugosité $R'_1$,

3. Membrane telle que définie à l'une des revendications 1 ou 2, dans laquelle le volume fini d'épaisseur E, ne comprend pas de couche poreuse de revêtement (ER').

4. Membrane telle que définie à l'une des revendications 1 à 3, dans laquelle le volume fini d'épaisseur E, comprend en outre une couche intermédiaire ($CI_{23}$) constituée de matériaux issus de l'électrode (EP) et du collecteur de courant (CC), ladite couche ($CI_{23}$) ayant un coefficient d'expansion thermique ($CET_{23}$) de valeur comprise entre celui, $CET_2$, de (EP) et celui, $CET_3$, de (CC) et de préférence supérieur au $CET_2$ et inférieur à $CET_3$, plaquée sur la surface $S_2$ de (EP) et sur la surface externe $S_{23}$ de laquelle, est plaqué le collecteur (CC), ladite couche $CI_{23}$ ayant une épaisseur $e_{23}$ non nulle, une surface spécifique $s_{23\omega}$ et une rugosité $R_{23}$.

5. Membrane telle que définie à l'une quelconque des revendications 1 à 4, dans laquelle le volume fini d'épaisseur E, comprend en outre une deuxième couche intermédiaire ($CI'_{23}$) constituée de matériaux issus de l'électrode (EP') et du collecteur de courant (CC'), ladite couche ($CI'_{23}$) ayant un coefficient d'expansion thermique ($CET'_{23}$) de valeur comprise entre celui, $CET'_2$, de (EP') et celui, $CET'_3$, de (CC') et de préférence supérieur au $CET'_2$ et inférieur à $CET'_3$, plaquée sur la surface $S'_2$ de (EP') et sur la surface externe $S'_{23}$ de laquelle, est plaqué le collecteur (CC'), ladite couche $CI'_{23}$ ayant une épaisseur $e'_{23}$ non nulle, une surface spécifique $s'_{23\omega}$ et une rugosité $R'_{23}$.

6. Membrane telle que définie à l'une quelconque des revendications 1 à 5, dans laquelle le volume fini d'épaisseur E, comprend en outre une couche intermédiaire ($CI_{34}$) constituée de matériaux issus du collecteur de courant (CC) et de la couche de revêtement (ER), ladite couche ($CI_{34}$) ayant un coefficient d'expansion thermique ($CET_{34}$) de valeur comprise entre celui, $CET_3$, de (CC) et celui, $CET_4$, de (ER) et de préférence supérieur au $CET_3$ et inférieur à $CET_4$, plaquée sur la surface $S_3$ de (CC) et sur la surface externe $S_{34}$ de laquelle, est plaquée la couche de revêtement (ER), ladite couche $CI_{34}$ ayant une épaisseur $e_{34}$ non nulle, une surface spécifique $s_{34\omega}$ et une rugosité $R_{34}$.

7. Membrane telle que définie à l'une quelconque des revendications 1, 2 et 4 à 6, dans laquelle le volume fini d'épaisseur E, comprend en outre une deuxième couche intermédiaire ($CI'_{34}$) constituée de matériaux issus du collecteur de courant (CC') et de la couche de revêtement (ER'), ladite couche ($CI'_{34}$) ayant un coefficient d'expansion thermique ($CET'_{34}$) de valeur comprise entre celui, $CET'_3$, de (EP') et celui, $CET'_4$, de (ER') et de préférence supérieur au $CET'_3$ et inférieur à $CET'_4$, plaquée sur la surface $S'_3$ de (CC') et sur la surface externe $S'_{34}$ de laquelle, est plaquée la couche de revêtement (ER'), ladite couche Cl'$_{34}$ ayant une épaisseur e'$_{34}$ non nulle, une surface spécifique s'$_{34\omega}$ et une rugosité R'$_{34}$.

**8.** Membrane céramique, telle que définie à l'une quelconque des revendications 1 à 7, **caractérisée en ce que** e$_2$ = e'$_2$.

**9.** Membrane céramique, telle que définie à l'une quelconque des revendications 1 à 8, **caractérisée en ce que** e$_3$ = e'$_3$.

**10.** Membrane céramique, telle que définie à l'une quelconque des revendications 2 à 9, **caractérisée en ce que** e$_1$ = e'$_1$.

**11.** Membrane céramique, telle que définie à l'une quelconque des revendications 5 à 10, **caractérisée en ce que** e$_{23}$ = e'$_{23}$.

**12.** Membrane céramique, telle que définie à l'une quelconque des revendications 7 à 11, **caractérisée en ce** e$_{34}$ = e'$_{34}$.

**13.** Membrane céramique, telle que définie à l'une quelconque des revendications 1,2 et 7 à 12, **caractérisée en ce** e$_4$ = e'$_4$.

**14.** Membrane céramique, telle que définie à l'une des revendications 1 à 13, **caractérisée en ce que**:

l'épaisseur e$_0$ est comprise entre environ 0,01 mm et environ 2 mm et plus particulièrement entre environ 0,05 mm et environ 1 mm,
les épaisseurs e$_1$ et e'$_1$ sont comprises environ entre 1 $\mu$m et 500 $\mu$m et plus particulièrement entre 10 $\mu$m et 300 $\mu$m,
les épaisseurs e$_2$ et e'$_2$ sont comprises entre environ 1 $\mu$m et environ 500 $\mu$m et plus particulièrement entre environ 10 $\mu$m et environ 300 $\mu$m,
les épaisseurs e$_3$ et e'$_3$ sont comprises entre environ 1 $\mu$m et environ 500 $\mu$m et plus particulièrement entre environ 10 $\mu$m et environ 300 $\mu$m,
les épaisseurs e$_4$ et e'$_4$ sont comprises entre environ 1 $\mu$m et environ 500 $\mu$m et plus particulièrement entre environ 10 $\mu$m et environ 300 $\mu$m,
les épaisseurs e$_{23}$ et e'$_{23}$ sont comprises entre environ entre 1 $\mu$m et environ 500 $\mu$m et plus particulièrement entre environ 10 $\mu$m et environ 300 $\mu$m et,
les épaisseurs e$_{34}$ et e'$_{34}$ sont comprises entre environ entre 1 $\mu$m et 500 $\mu$m et plus particulièrement entre 10 $\mu$m et 300 $\mu$m.

**15.** Membrane céramique, telle que définie à l'une des revendications 1 à 14, consistant en une plaque de surface plane S et d'épaisseur E et **caractérisée en ce que** chacune des surfaces S$_0$, S'$_0$, S$_1$, S$_2$, S'$_2$, S$_3$, S'$_3$, S$_4$ et le cas échéant, S'$_1$, S'$_4$, S$_{23}$, S'$_{23}$, S$_{34}$ et S'$_{34}$, est égale à S et consistant de préférence en une plaque de longueur L, comprise entre environ 1 cm et environ 1 m et plus particulièrement, entre 5 cm et environ 50 cm et de largeur l, comprise entre environ 1 cm et environ 1 m et plus particulièrement entre 5 cm et environ 50 cm.

**16.** Membrane céramique, telle que définie à l'une des revendications 1, à 13, de forme tubulaire, consistant en un cylindre creux ouvert à ses deux extrémités ou seulement à l'une d'entre elles, de diamètre extérieur D et de diamètre intérieur d, **caractérisée en ce que** la couche de support est la couche dense (CD) de l'électrolyte solide, **en ce que** les surfaces S$_0$, S'$_0$, S$_1$, S$_2$, S'$_2$, S$_3$, S'$_3$, S$_4$ et le cas échéant, S'$_1$, S'$_4$, S$_{23}$, S'$_{23}$, S$_{34}$ et S'$_{34}$, sont cylindriques et coaxiales et **en ce que** l'épaisseur E est de la membrane est égale à la moitié de la différence (D - d).

**17.** Membrane céramique, telle que définie à la revendication 16, de longueur L comprise environ entre 1 cm et environ 1 m et plus particulièrement entre 10 cm et 50 cm.

**18.** Membrane céramique, telle que définie à l'une des revendications 3 et 16 ou 17, consistant en un cylindre creux ouvert à une seule de ses deux extrémités, dans lequel l'électrode cathodique (EP) et le collecteur de courant cathodique (CC) sont disposés sur la paroi interne dudit cylindre et l'anode (EP') et le collecteur de courant anodique (CC'), sont disposé sur la paroi externe dudit cylindre.

**19.** Membrane céramique, telle que définie à l'une des revendications 1 à 18, dans laquelle l'électrolyte solide est représenté par la formule (I) :

$$(M_\alpha O_\beta)_{1-x} (R_\gamma O_\delta)_x \qquad (I)$$

dans laquelle M représente au moins un atome trivalent ou tétravalent choisi parmi Bi, Ce, Zr, Ga, Th ou Hf, $\alpha$ et $\beta$ sont tels que la structure $M_\alpha O_\beta$ est électriquement neutre, R représente au moins un atome divalent ou trivalent choisi parmi Mg, Ca, Ba, Sr, Gd, Sc, Yb, Y, Sm ou La, $\gamma$ et $\delta$ sont tels que la structure $R_\gamma O_\delta$ est électriquement neutre, x est compris entre 0,05 et 0,30 et plus particulièrement, entre 0,075 et 0,15.

20. Membrane céramique, telle que définie à la revendication 19, dans laquelle l'électrolyte solide est un oxyde céramique ou un mélange d'oxydes céramiques, choisi parmi $ZrO_2$, $CeO_2$, $HfO_2$, $ThO_2$, $Ga_2O_3$ ou $Bi_2O_3$, dopé avec un ou plusieurs oxydes choisis parmi MgO, CaO, BaO, SrO, $Gd_2O_3$, $Sc_2O_3$, $Yb_2O_3$, $Er_2O_3$, $Y_2O_3$, $Sm_2O_3$, $In_2O_3$, $Nb_2O_3$ et $La_2O_3$.

21. Membrane céramique, telle que définie à la revendication 20, dans laquelle l'électrolyte solide est l'oxyde de zirconium stabilisé à l'oxyde d'yttrium de formule (Ia) :

$$(ZrO_2)_{1-x} (Y_2O_3)_x \qquad \text{(Ia)}$$

dans laquelle x est compris entre 0,05 et 0,15.

22. Membrane céramique, telle que définie aux revendications 1 à 21, dans laquelle les électrodes (EP) et (EP') sont en un matériau ou un mélange de matériau de formule (II) :

$$M_1M_2O_3, \qquad \text{(II)}$$

dans laquelle, $M_1$ représente un ou plusieurs atomes choisis parmi La, Ce, Pr, Nd, Pm, Sm, Eu, Gd, Tb, Dy, Ho, Er, Tm, Yb, Lu, Y, Mg, Ca, Sr ou Ba, $M_2$ représente un ou plusieurs atomes choisis parmi Sc, Ti, V, Cr, Mn, Fe, Co, Ni, Cu ou Zn.

23. Membrane céramique, telle que définie à la revendication 22, dans laquelle les électrodes (EP) et (EP'), de compositions identiques ou différentes, sont en un matériau ou en un mélange de matériaux choisis parmi $LaNiO_3$, $Ca_uLa_vMnO_w$, $La_uSr_vMnO_w$, $La_uSr_vCoO_w$, $Ca_uLa_vCoO_w$, $Gd_uSr_vCoO_w$, $La_uSr_vCrO_w$, $La_uSr_vFeO_w$ ou $La_uSr_vFe_c$-$Co_dO_w$, dans lesquels $u + v$ et $c + d$ sont égaux à 1 et w est tel que la structure en cause est électriquement neutre.

24. Membrane céramique, telle que définie aux revendications 1 à 23, dans laquelle les couches (CA) et (CA') sont de composition chimique identique à celle de l'électrolyte solide.

25. Membrane céramique, telle que définie à la revendication 24, **caractérisée en ce qu'**elle comprend un volume fini non nul d'épaisseur totale non nulle E, comprenant :

a) une couche d'un électrolyte solide à gradient continu de porosité superficielle contrôlé (CE), ayant, à la température d'électrolyse, une structure cristalline conductrice par ions oxydes, d'épaisseur non nulle $e_0 + e_1 + e'_1$ et de surfaces externes opposées $S_1$ et $S'_1$ identiques, de surface spécifique $s_{1\omega}$ et $s'_{1\omega}$ identiques et de rugosité $R_1$ et $R'_1$ identiques,
b) d'une cathode poreuse (EP) et d'une anode poreuse (EP'), conductrices mixtes, de compositions chimiques identiques ou différentes, plaquées, l'une sur la surface $S_1$ de (CA) et l'autre sur la surface $S'_0$ de (CD), lesdites électrodes ayant respectivement des surfaces externes $S_2$ et $S'_2$ non nulles, identiques ou différentes et des épaisseurs non nulles $e_2$, et $e'_2$, identiques ou différentes, et
c) d'un collecteur de courant cathodique (CC) et d'un collecteur de courant anodique (CC'), de compositions chimiques identiques ou différentes, plaqués respectivement sur les surfaces $S_2$ et $S'_2$ de (EP) et (EP'), lesdits collecteurs (CC) et (CC'), ayant respectivement des surfaces externe $S_3$ et $S_3'$ non nulles, identiques ou différentes et des épaisseurs non nulles, $e_3$ et $e'_3$, identiques ou différentes,
d) d'une couche poreuse de revêtement (ER) constituée d'un matériau ou d'un mélange de matériaux, chimiquement compatible avec les matériaux, ou les mélanges de matériaux, desdits électrodes, collecteurs de courant, couche d'accrochage et électrolyte solide, dont la température de frittage est très proche des températures de frittage des matériaux, ou des mélanges de matériaux constituant lesdits desdits électrodes, collecteurs de courants, couche d'accrochage et électrolyte solide, ladite couche (ER) étant plaquée sur la surface $S_3$ de (CC), et éventuellement
e) d'une couche poreuse de revêtement (ER') constituée d'un matériau ou d'up mélange de matériaux, chimiquement compatible avec les matériaux, ou les mélanges de matériaux, desdits électrodes, collecteurs de courants et électrolyte solide, dont la température de frittage est très proche des températures de frittage des matériaux, ou des mélanges de matériaux constituant lesdits desdits électrodes, collecteurs de courants, couche d'accrochage et électrolyte solide, ladite couche (ER') étant plaquée sur la surface S$_3$' de (CC'), ladite couche de revêtement ayant une surface S'$_4$, et une épaisseur e'$_4$ non nulle,

et **caractérisée en ce que** l'épaisseur E du volume de ladite membrane, est égale à la somme des épaisseurs de chacun des éléments cités.

26. Membrane céramique, telle que définie aux revendications 1 à 23, dans laquelle les couches (CA) et (CA') sont de composition chimique identique à celle des électrodes (EP) et (EP').

27. Membrane céramique, telle que définie aux revendications 1 à 23, dans laquelle les couches (CA) et CA') sont de composition chimique identique ou différente, consistant en un mélange de composés de formule (la) et de formule (II).

28. Membrane céramique, telle que définie à l'une des revendications 1 à 26, dans laquelle les collecteurs de courant (CC) et (CC'), sont constitués essentiellement, soit par un métal, soit par une laque de métal, et plus particulièrement une laque de platine, une laque de palladium, d'or ou une laque d'argent, soit par un mélange métal / céramique "oxyde inerte", plus particulièrement un mélange métal / alumine, soit par un mélange métal / céramique oxyde "conducteur mixte", et plus particulièrement un mélange métal / matériau pérovskite, soit par un mélange métal / céramique oxyde "conducteur ionique" et plus particulièrement un mélange métal / zircone stabilisée à l'yttrium (8% mol.), soit par un mélange métal / céramique oxyde "conducteur électronique" et plus particulièrement un mélange métal / oxyde de nickel, soit par un mélange métal / carbure et plus particulièrement un mélange métal / carbure de silicium, soit par un mélange métal / nitrure et plus particulièrement un mélange métal / nitrure de silicium, soit par un mélange d'un ou de plusieurs des mélanges définis précédemment.

29. Membrane céramique, telle que définie à la revendication 28, dans laquelle les collecteurs de courant (CC) et (CC'), de compositions identiques ou différentes, sont en un mélange d'un métal choisi, soit parmi les métaux de transition, plus particulièrement parmi, l'argent, le cuivre et le nickel, soit parmi les métaux nobles et plus particulièrement parmi l'or, le platine et le palladium avec ou bien un ou plusieurs composés de formule (I) telle que définie précédemment ou bien avec un ou plusieurs composés de formule (II) telle que définie précédemment.

30. Membrane céramique, telle que définie à la revendication 29, dans laquelle le collecteur de courant cathodique (CC) est soit en un mélange d'argent et de zircone dopée à l'oxyde d'yttrium, de préférence YSZ(8%), soit en un mélange d'argent avec un ou plusieurs composés de formule (II), de préférence le manganite de lanthane dopé au strontium (LSM) et tout particulièrement La$_{0,9}$Sr$_{0,1}$MnO$_{3-\delta}$, soit en un mélange d'argent, de céramique "conductrice ionique" et de céramique "conductrice mixte" et de préférence le mélange Ag-YSZ(8%)-LSM

31. Membrane céramique, telle que définie à l'une des revendications 28 ou 29, dans laquelle le collecteur de courant anodique (CC') est soit un dépôt d'or poreux, soit en un mélange d'or et de zircone dopée à l'oxyde d'yttrium, de préférence YSZ(8%), soit en un mélange d'or avec un ou plusieurs composés de formule (II), de préférence le manganite de lanthane dopé au strontium (LSM) et tout particulièrement La$_{0,9}$Sr$_{0,1}$MnO$_{3-\delta 1}$ ou la ferrocobaltite de lanthane dopé au strontium (LSCoFe) et tout particulièrement La$_{0,8}$Sr$_{0,2}$Co$_{0,8}$Fe$_{0,2}$O$_w$.

32. Membrane céramique, telle que définie à l'une des revendications 1 à 31, dans laquelle les couches de revêtement (ER) et, le cas échéant (ER'), sont isolantes.

33. Membrane céramique, telle que définie à l'une des revendications 1 à 31, dans laquelle dans laquelle les couches de revêtement (ER) et, le cas échéant (ER'), sont en des composés ou des mélanges de composés de formule (II) et plus particulièrement en des composés de formule La$_u$Sr$_v$CO$_d$Fe$_c$O$_w$, dans lesquels u + v et c + d sont 'égaux à 1 et w est tel que la structure en cause est électriquement neutre.

34. Membrane céramique, telle que définie à la revendications 33, dans laquelle les couches de revêtement (ER) et, le cas échéant (ER'), sont en un composé de formule (IIa):

$$La_{0,8}Sr_{0,2}Co_{0,8}Fe_{0,2}O_w \qquad (IIa)$$

dans laquelle w est tel que la structure de formule (IIa), est électriquement neutre.

**35.** Membrane céramique, telle que définie à l'une des revendications 1 à 34, dans laquelle chacun des collecteurs de courant (CC) et (CC'), est relié à la partie extérieure du circuit par un fil conducteur électronique, en un métal identique ou différent à celui que lesdits collecteurs comportent.

**36.** Membrane céramique, telle que définie à l'une des revendications 16 à 35, **caractérisée en ce qu'**elle est remplie de billes de mullite, de zircone, d'alumine ou de pérovskite.

**37.** Utilisation d'une membrane céramique, telle que définie à l'une quelconque des revendications 1 à 36, pour séparer l'oxygène de l'air ou d'un mélange gazeux, le contenant.

**38.** Utilisation d'une membrane céramique, telle que définie à l'une quelconque des revendications 1 à 36, pour produire de l'oxygène ultra - pur sous pression.

**39.** Utilisation d'une membrane céramique, telle que définie à l'une quelconque des revendications 1 à 36, pour analyser la présence d'oxygène dans une atmosphère gazeuse.

**40.** Procédé de préparation d'oxygène ultra - pur sous pression élevée ou non consistant en la séparation de l'oxygène de l'air par conduction ionique à travers une cellule électrochimique, telle que définie à l'une quelconque des revendications 18 à 35, dans une enceinte fermée.

**41.** Procédé d'élimination de l'oxygène d'une atmosphère gazeuse dans laquelle sont effectuées des applications nécessitant des atmosphères à faible teneur en oxygène ou sans oxygène, consistant en la séparation de l'oxygène de ladite atmosphère, par conduction ionique à travers une membrane, telle que définie à l'une quelconque des revendications 1 à 36.

**42.** Procédé de production d'énergie thermique et électrique au sein d'une pile à combustible solide, par réaction de l'oxygène et de l'hydrogène, **caractérisé en ce que** ledit oxygène est obtenu en le séparant de l'air à travers une membrane céramique, telle que définie à l'une quelconque des revendications 1 à 36.

**Claims**

**1.** Ceramic membrane conducting by oxide ions, **characterized in that** it comprises a non-zero finished volume of non-zero total thickness T, comprising:

a) a dense layer (DL) of a solid electrolyte having, at the electrolysis temperature, a crystal structure conducting by oxide ions, of non-zero thickness to and of opposed external surfaces $S_0$ and $S'_0$ that are identical or different;
b) a layer called the tie layer (TL) that possesses either a crystal structure conducting by oxide ions or a hybrid conducting crystal structure or a mixture of the two aforementioned crystal structures, the said tie layer being pressed against the surface $S_0$ of the dense layer (DL), having a non-zero thickness $t_1$, an external surface $S_1$, a specific surface area $S_{1\omega}$, and a roughness $R_1$;
c) a hybrid conducting porous cathode (PE) and a hybrid conducting porous anode (PE'), of identical or different chemical compositions, pressed one against the surface $S_1$ of (TL) and the other against the surface $S'_0$ of (DL), the said electrodes having respectively, external surfaces $S_2$ and $S'_2$ of non-zero area, that are identical or different, and non-zero thicknesses $t_2$ and $t'_2$, that are identical or different; and
d) a cathode current collector (CC) and an anode current collector (CC'), of identical or different chemical compositions, pressed respectively against the surfaces $S_2$ and $S'_2$ of (PE) and (PE'), the said collectors (CC) and (CC') having external surfaces $S_3$ and $S'_3$ of non-zero area, that are identical or different, and non-zero thicknesses $t_3$ and $t'_3$, that are identical or different, respectively;
e) a porous covering layer (CL) formed from a material or a mixture of materials chemically compatible with the materials, or mixtures of materials, of the said electrodes, current collectors, tie layer and solid electrolyte, the sintering temperature of which is very close to the sintering temperatures of the constituent materials, or mixtures of materials, of the said electrodes, current collectors, tie layer and solid electrolyte, the said layer (CL) being pressed against the surface $S_3$ of (CC), and optionally
f) a porous covering layer (CL') made of a material or a mixture of materials that are chemically compatible with the materials or mixtures of materials of the said electrodes, current collectors and solid electrolyte, the sintering temperature of which is very close to the sintering temperatures of the constituent materials or mixtures of materials of the said electrodes, current collectors, tie layer and solid electrolyte, the said layer (CL') being pressed against the surface $S'_3$ of (CC'), the said covering layer having a surface $S'_4$ and a non-zero thickness $t'_4$;

and **characterized in that** the thickness T of the volume of the said membrane is equal to the sum of the thicknesses of each of the elements mentioned.

2. Membrane as defined in Claim 1, in which the finished volume of thickness T includes a second tie layer (TL') possessing either a crystal structure conducting by oxide ions or a hybrid conducting crystal structure or a mixture of the two aforementioned crystal structures, the said second tie layer being pressed against the surface $S'_0$ of the dense layer (DL), and against the external surface $S'_1$ of which the electrode (PE') is pressed, the said layer (TL') having a non-zero thickness $t'_1$, a specific surface area $s'_{1\omega}$ and a roughness $R'_1$.

3. Membrane as defined in either of Claims 1 and 2, in which the finished volume of thickness T does not include any porous covering layer (CL').

4. Membrane as defined in one of Claims 1 to 3, in which the finished volume of thickness T furthermore includes an intermediate layer ($IL_{23}$) made of materials coming from the electrode (PE) and from the current collector (CC), the said layer ($IL_{23}$) having a thermal expansion coefficient ($TEC_{23}$) of between that, $TEC_2$, of (PE) and that, $TEC_3$, of (CC) and preferably greater than the $TEC_2$ and less than $TEC_3$, and being pressed against the surface $S_2$ of (PE), and against the external surface $S_{23}$ of which the collector (CC) is pressed, the said layer $IL_{23}$ having a non-zero thickness $t_{23}$, a specific surface area $S_{23\omega}$ and a roughness $R_{23}$.

5. Membrane as defined in any one of Claims 1 to 4, in which the finished volume of thickness T furthermore includes a second intermediate layer ($IL'_{23}$) made of materials coming from the electrode (PE') and from the current collector (CC'), the said layer ($IL'_{23}$) having a thermal expansion coefficient ($TEC'_{23}$) of between that, $TEC'_2$, of (PE') and that, $TEC'_3$, of (CC') and preferably greater than the $TEC'_2$ and less than $TEC'_3$, and being pressed against the surface $S'_2$ of (PE'), and against the external surface $S'_{23}$ of which the collector (CC') is pressed, the said layer $IL'_{23}$ having a non-zero thickness $t'_{23}$, a specific surface area $s'_{23\omega}$ and a roughness $R'_{23}$.

6. Membrane as defined in any one of Claims 1 to 5, in which the finished volume of thickness T furthermore includes an intermediate layer ($IL_{34}$) made of materials coming from the current collector (CC), and from the covering layer (CL), the said layer ($IL_{34}$) having a thermal expansion coefficient ($TEC_{34}$) of between that, $TEC_3$, of (CC) and that, $TEC_4$, of (CL) and preferably greater than the $TEC_3$ and less than $TEC_4$, and being pressed against the surface $S_3$ of (CL), and against the external surface $S_{34}$ of which the covering layer (CL) is pressed, the said layer $IL_{34}$ having a non-zero thickness $t_{34}$, a specific surface area $s_{34\omega}$ and a roughness $R_{34}$.

7. Membrane as defined in any one of Claims 1, 2 and 4 to 6, in which the finished volume of thickness T furthermore includes a second intermediate layer ($IL'_{34}$) made of materials coming from the current collector (CC'), and from the covering layer (CL'), the said layer ($IL'_{34}$) having a thermal expansion coefficient ($TEC'_{34}$) of between that, $TEC'_3$, of (PE') and that, $TEC'_4$, of (CL') and preferably greater than the $TEC'_3$ and less than $TEC'_4$, and being pressed against the surface $S'_3$ of (CC'), and against the external surface $S'_{34}$ of which the covering layer (CL') is pressed, the said layer $IL'_{34}$ having a non-zero thickness $t'_{34}$, a specific surface area $s'_{34\omega}$ and a roughness $R'_{34}$.

8. Ceramic membrane as defined in any one of Claims 1 to 7, **characterized in that** $t_2 = t'_2$.

9. Ceramic membrane as defined in any one of Claims 1 to 8, **characterized in that** $t_3 = t'_3$.

10. Ceramic membrane as defined in any one of Claims 2 to 9, **characterized in that** $t_1 = t'_1$.

11. Ceramic membrane as defined in any one of Claims 5 to 10, **characterized in that** $t_{23} = t'_{23}$.

12. Ceramic membrane as defined in any one of Claims 7 to 11, **characterized in that** $t_{34} = t'_{34}$.

13. Ceramic membrane as defined in any one of Claims 1, 2 and 7 to 12, **characterized in that** $t_4 = t'_4$.

14. Ceramic membrane as defined in one of Claims 1 to 13, **characterized in that**:

the thickness $t_0$ is between about 0.01 mm and about 2 mm and more particularly between about 0.05 mm and about 1 mm;

the thicknesses $t_1$ and $t'_1$ are between about 1 $\mu$m and 500 $\mu$m and more particularly between 10 $\mu$m and 300 $\mu$m;

the thicknesses $t_2$ and $t'_2$ are between about 1 $\mu$m and about 500 $\mu$m and more particularly between about 10 $\mu$m and about 300 $\mu$m;

the thicknesses $t_3$ and $t'_3$ are between about 1 $\mu$m and about 500 $\mu$m and more particularly between about 10 $\mu$m and about 300 $\mu$m;

the thicknesses $t_4$ and $t'_4$ are between about 1 $\mu$m and about 500 $\mu$m and more particularly between about 10 $\mu$m and about 300 $\mu$m;

the thicknesses $t_{23}$ and $t'_{23}$ are between about 1 $\mu$m and about 500 $\mu$m and more particularly between about 10 $\mu$m and about 300 $\mu$m; and

the thicknesses $t_{34}$ and $t'_{34}$ are between about 1 $\mu$m and 500 $\mu$m and more particularly between 10 $\mu$m and 300 $\mu$m.

15. Ceramic membrane as defined in one of Claims 1 to 14, consisting of a plate of plane area S and thickness T and **characterized in that** each area of the surfaces $S_0$, $S'_0$, $S_1$, $S_2$, $S'_2$, $S_3$, $S'_3$, $S_4$ and, where appropriate, $S'_1$, $S'_4$, $S_{23}$, $S'_{23}$, $S_{34}$ and $S'_{34}$, is equal to the area of S, and preferably consisting of a plate of length L between about 1 cm and about 1 m, and more particularly between 5 cm and about 50 cm, and of width w between about 1 cm and about 1 m, and more particularly between 5 cm and about 50 cm.

16. Ceramic membrane as defined in one of Claims 1 to 13, of tubular shape, consisting of a hollow cylinder open at both its ends or at only one of them, of outside diameter D and inside diameter d, **characterized in that** the support layer is the dense layer (DL) of the solid electrolyte, **in that** the surfaces $S_0$, $S'_0$, $S_1$, $S_2$, $S'_2$, $S_3$, $S'_3$, $S_4$ and, where appropriate $S'_1$, $S'_4$, $S_{23}$, $S'_{23}$, $S_{34}$ and $S'_{34}$, are cylindrical and coaxial and **in that** the thickness T is of the membrane is equal to half of the difference (D-d).

17. Ceramic membrane as defined in Claim 16, of length L between about 1 cm and about 1 m and more particularly between 10 cm and 50 cm.

18. Ceramic membrane as defined in one of Claims 3 and 16 or 17, consisting of a hollow cylinder open at only one of its two ends, in which the cathode electrode (PE) and the cathode current collector (CC) are placed on the internal wall of the said cylinder and the anode (PE') and the anode current collector (CC') are placed on the external wall of the said cylinder.

19. Ceramic membrane as defined in one of Claims 1 to 18, in which the solid electrolyte is represented by formula (I):

$$(M_\alpha O_\beta)_{1-x} (R_\gamma O_\delta)_x \qquad (I)$$

in which M represents at least one trivalent or tetravelent atom chosen from Bi, Ce, Zr, Ga, Th or Hf, $\alpha$ and $\beta$ are such that the structure $M_\alpha O_\beta$ is electrically neutral, R represents at least one divalent or trivalent atom chosen from Mg, Ca, Ba, Sr, Gd, Sc, Yb, Y, Sm or La, $\gamma$ and $\delta$ are such that the structure $R_\gamma O_\delta$ is electrically neutral and x is between 0.05 and 0.30 and more particularly between 0.075 and 0.15.

20. Ceramic membrane as defined in Claim 19, in which the solid electrolyte is a ceramic oxide or a mixture of ceramic oxides chosen from $ZrO_2$, $CeO_2$, $HfO_2$, $ThO_2$, $Ga_2O_3$ or $Bi_2O_3$, doped with one or more oxides chosen from MgO, CaO, BaO, SrO, $Gd_2O_3$, $Sc_2O_3$, $Yb_2O_3$, $Er_2O_3$, $Y_2O_3$, $Sm_2O_3$, $In_2O_3$, $Nb_2O_3$ and $La_2O_3$.

21. Ceramic membrane as defined in Claim 20, in which the solid electrolyte is yttrium-oxide-stabilized zirconium oxide of formula (Ia):

$$(ZrO_2)_{1-x} (Y_2O_3)_x \qquad (Ia)$$

in which x is between 0.05 and 0.15.

22. Ceramic membrane as defined in Claims 1 to 21, in which the electrodes (PE) and (PE') are made of a material or a mixture of materials of formula (II):

$$M_1 M_2 O_3 \qquad (II)$$

in which $M_1$ represents one or more atoms chosen from La, Ce, Pr, Nd, Pm, Sm, Eu, Gd, Tb, Dy, Ho, Er, Tm, Yb, Lu, Y, Mg, Ca, Sr and Ba, and $M_2$ represents one or more atoms chosen from Sc, Ti, V, Cr, Mn, Fe, Co, Ni, Cu and Zn.

**23.** Ceramic membrane as defined in Claim 22, in which the electrodes (PE) and (PE'), of identical or different compositions, are made of a material or a mixture of materials chosen from $LaNiO_3$, $Ca_uLa_vM_nO_w$, $La_uSr_vM_nO_w$, $La_uSr_vCoO_w$, $Ca_uLa_vCoO_w$, $Gd_uSr_vCoO_w$, $La_uSr_vC_rO_w$, $La_uSr_vFeO_w$ or $La_uSr_vFe_cCO_dO_w$, in which u + v and c + d are equal to 1 and w is such that the structure in question is electrically neutral.

**24.** Ceramic membrane as defined in Claims 1 to 23, in which the layers (TL) and (TL') are of identical chemical composition to that of the solid electrolyte.

**25.** Ceramic membrane as defined in Claim 24, **characterized in that** it comprises a non-zero finished volume of non-zero total thickness T, comprising:

a) a layer of a solid electrolyte with a continuous controlled surface porosity gradient (CE) having, at the electrolysis temperature, a crystal structure conducting by oxide ions, with a non-zero thickness $t_0 + t_1 + t'_1$ and of opposed external surfaces $S_1$ and $S'_1$ of identical area, identical specific surface area $s_{1\omega}$ and $s'_{1\omega}$) and identical roughness $R_1$ and $R'_1$;
b) a hybrid conducting porous cathode (PE) and a hybrid conducting porous anode (PE'), of identical or different chemical compositions, pressed one against the surface $S_1$ of (TL) and the other against the surface $S'_0$ of (DL), the said electrodes having external surfaces $S_2$ and $S'_2$ of identical or different non-zero areas and identical or different non-zero thicknesses $t_2$ and $t'_2$, respectively; and
c) a cathode current collector (CC) and an anode current collector (CC'), of identical or different chemical compositions, pressed respectively against the surfaces $S_2$ and $S'_2$ of (PE) and (PE'), the said current collectors (CC) and (CC') having external surfaces $S_3$ and $S'_3$ of identical or different non-zero areas and identical or different non-zero thicknesses $t_3$ and $t'_3$, respectively;
d) a porous covering layer (CL) made of a material, or a mixture of materials, chemically compatible with the materials or the mixtures of materials of the said electrodes, current collectors, tie layer and solid electrolyte, the sintering temperature of which is very close to the sintering temperatures of the constituent materials, or mixtures of materials, of the said electrodes, current collectors, tie layer and solid electrolyte, the said layer (CL) being pressed against the surface $S_3$ of (CC), and optionally
e) a porous covering layer (CL') made of a material or a mixture of materials that are chemically compatible with the materials or mixtures of materials of the said electrodes, current collectors and solid electrolyte, the sintering temperature of which is very close to the sintering temperatures of the constituent materials or mixtures of materials of the said electrodes, current collectors, tie layer and solid electrolyte, the said layer (CL') being pressed against the surface $S'_3$ of (CC'), the said covering layer having a surface $S'_4$ and a non-zero thickness $t'_4$;

and **characterized in that** the thickness T of the volume of the said membrane is equal to the sum of the thicknesses of each of the layers mentioned.

**26.** Ceramic membrane as defined in Claims 1 to 23, in which the layers (TL) and (TL') are of identical chemical composition to that of the electrodes (PE) and (PE').

**27.** Ceramic membrane as defined in Claims 1 to 23, in which the layers (TL) and (TL') are of identical or different chemical composition, consisting of a mixture of compounds of formula (Ia) and of formula (II).

**28.** Ceramic membrane as defined in one of Claims 1 to 26, in which the current collectors (CC) and (CC') consist essentially <u>either</u> of a metal <u>or</u> of a metal lacquer and more particularly a platinum lacquer, a palladium lacquer, a gold lacquer or a silver lacquer, <u>or</u> of a metal/"inert oxide" ceramic mixture, more particularly a metal/alumina mixture, <u>or</u> of a metal/"hybrid conductor" oxide ceramic mixture and more particularly a metal/perovskite material mixture, <u>or</u> of a metal/"ionic conductor" oxide ceramic mixture and more particularly a metal/yttrium (8 mol%)-stabilized zirconia mixture or of a metal/"electronic conductor" oxide ceramic mixture and more particularly a metal/nickel oxide mixture, <u>or</u> of a metal/carbide mixture, and more particularly a metal/silicon carbide mixture, <u>or</u> of a metal/nitride mixture and more particularly a metal/silicon nitride mixture, <u>or</u> of a mixture of one or more of the mixtures defined above.

**29.** Ceramic membrane as defined in Claim 28, in which the current collectors (CC) and (CC'), of identical or different compositions, are a mixture of a metal chosen <u>either</u> from transition metals, more particularly from silver, copper and nickel, <u>or</u> from noble metals and more particularly from gold, platinum and palladium with <u>either</u> one or more

compounds of formula (I) as defined above <u>or</u> with one or more compounds of formula (II) as defined above.

30. Ceramic membrane as defined in Claim 29, in which the cathode current collector (CC) is <u>either</u> made of a mixture of silver and yttrium-oxide-doped zirconia, preferably (8%) YSZ, <u>or</u> a mixture of silver with one or more compounds of formula (II), preferably strontium-doped lanthanum manganite (LSM) and most particularly $La_{0.9}Sr_{0.1}MnO_{3-\delta}$, <u>or</u> of a silver/"ionic conductor" ceramic/"hybrid conductor" ceramic mixture and preferably the mixture Ag/(8%) YSZ/LSM.

31. Ceramic membrane as defined in either of Claims 28 and 29, in which the anode current collector (CC') is either a coating of porous gold <u>or</u> is made of a mixture of gold and ytrium-oxide-doped zirconia, preferably (8%) YSZ <u>or</u> made of a mixture of gold with one or more compounds of formula (II), preferably strontium-doped lanthanum manganite (LSM) and most particularly $La_{0.9}Sr_{0.1}MnO_{3-\delta}$ or strontium-doped lanthanum ferrocobaltite (LSCoFe) and most particularly $La_{0.8}Sr_{0.2}Co_{0.8}Fe_{0.2}O_w$.

32. Ceramic membrane as defined in one of Claims 1 to 31, in which the covering layers (CL), and where appropriate (CL'), are insulating.

33. Ceramic membrane as defined in one of Claims 1 to 31, in which the covering layers (CL), and where appropriate (CL'), are made of compounds or mixtures of compounds of formula (II) and more particularly of compounds of formula $La_uSr_vCO_dFe_cO_w$ in which u + v and c + d are equal to 1 and w is such that the structure in question is electrically neutral.

34. Ceramic membrane as defined in Claim 33, in which the covering layers (CL) and, where appropriate (CL') are made of a compound of formula (IIa):

$$La_{0.8}Sr_{0.2}Co_{0.8}Fe_{0.2}O_w \qquad\qquad (IIa)$$

in which w is such that the structure of formula (IIa) is electrically neutral.

35. Ceramic membrane as defined in one of Claims 1 to 34, in which each of the current collectors (CC) and (CC') is connected to the external part of the circuit via an electronically conducting wire made of a metal identical to or different from that of which the said collectors are composed.

36. Ceramic membrane as defined in one of Claims 16 to 35, **characterized in that** it is filled with beads of mullite, zirconia, alumina or perovskite.

37. Use of a ceramic membrane, as defined in any one of Claims 1 to 36, for separating oxygen from air or from a gas mixture containing it.

38. Use of a ceramic membrane, as defined in any one of Claims 1 to 36, for producing ultrapure oxygen under pressure.

39. Use of a ceramic membrane, as defined in any one of Claims 1 to 36, for analysing for the presence of oxygen in a gaseous atmosphere.

40. Process for preparing ultrapure oxygen at high pressure or otherwise, consisting in separating oxygen from air by ionic conduction through an electrochemical cell as defined in any one of Claims 18 to 35, in a closed chamber.

41. Process for eliminating oxygen from a gaseous atmosphere in which applications requiring atmospheres having a low oxygen content or containing no oxygen are carried out, consisting in separating oxygen from the said atmosphere by ionic conduction through a membrane as defined in any one of Claims 1 to 36.

42. Process for producing thermal and electrical energy within a solid fuel cell by reaction of oxygen and hydrogen, **characterized in that** the said oxygen is obtained by being separated from the air through a ceramic membrane as defined in any one of Claims 1 to 36.

**EP 1 358 003 B1**

**Patentansprüche**

**1.** Durch Oxidionen leitende Keramikmembran, **dadurch gekennzeichnet, dass** sie ein endliches Volumen umfasst, das nicht Null ist, und eine Gesamtdicke E aufweist, die nicht Null ist, wobei sie folgendes umfasst:

a) eine dichte Schicht (CD) eines Feststoffelektrolyten, der bei der Elektrolysetemperatur eine durch Oxidionen leitende Kristallstruktur aufweist, die eine Dicke $e_0$ aufweist, die nicht Null ist, sowie gleiche oder verschiedene gegenüberliegende Außenflächen $S_0$ und $S'_0$,

b) eine Haftschicht (CA), die <u>entweder</u> eine durch Oxidionen leitende Kristallstruktur aufweist, <u>oder</u> eine gemischte leitende Kristallstruktur, <u>oder</u> eine Mischung der vorerwähnten Kristallstrukturen, die auf die Oberfläche $S_0$ der dichten Schicht (CD) aufgebracht ist, und eine Dichte $e_1$ aufweist, die nicht Null ist, sowie eine Außenfläche $S_1$, eine spezifische Oberfläche $s_{1\omega}$, und eine Rauhigkeit $R_1$,

c) eine poröse Kathode (EP) und eine poröse Anode (EP'), die gemischt leitend sind, gleiche oder verschiedene chemische Zusammensetzungen aufweisen und von denen eine auf die Oberfläche $S_1$ von (CA) aufgebracht ist und die andere auf die Oberfläche $S'_0$ von (CD), wobei die Elektroden jeweils gleiche oder verschiedene Außenflächen $S_2$ und $S'_2$ aufweisen, die nicht Null sind, und

d) einen Kathodenstromsammler (CC) und einen Anodenstromsammler (CC') mit gleichen oder verschiedenen chemischen Zusammensetzungen, die jeweils auf die Oberflächen $S_2$ und $S'_2$ von (EP) und (EP') aufgebracht sind, wobei die Stromsammler (CC) und (CC') jeweils die gleichen oder verschiedenen Außenflächen $S_3$ und $S'_3$ aufweisen, die nicht Null sind, sowie gleiche oder verschiedene Dicken $e_3$ und $e'_3$, die nicht Null sind,

e) eine poröse Deckschicht (ER), die aus einem Material oder Materialgemisch besteht, das chemisch mit den Materialien oder Materialgemischen der Elektroden, Stromsammler, Haftschicht und Feststoffelektrolyten kompatibel ist, dessen Sintertemperatur den Sintertemperaturen der Materialien oder Materialgemische der Elektroden, Stromsammler, Haftschicht und Feststoffelektrolyten sehr ähnlich ist, wobei die Schicht (ER) auf die Oberfläche $S_3$ von (CC) aufgebracht ist, und eventuell

f) eine poröse Deckschicht (ER'), die aus einem Material oder Materialgemisch besteht, das chemisch mit den Materiailen oder Materialgemischen der Elektroden, Stromsammler, Haftschicht und Feststoffelektrolyten kompatibel ist, dessen Sintertemperatur den Sintertemperaturen der Materialien oder Materialgemische der Elektroden, Stromsammler, Haftschicht und Feststoffelektrolyten sehr ähnlich ist, wobei die Schicht (ER') auf die Oberfläche $S'_3$ von (CC') aufgebracht ist, wobei die Deckschicht eine Oberfläche $S'_4$ und eine Dicke $e'_4$ aufweist, die nicht Null sind,

**dadurch gekennzeichnet, dass** die Dicke E des Volumens der Membran gleich der Summe der Dicken jedes der erwähnten Elemente ist.

**2.** Membran wie in Anspruch 1 definiert, wobei das endliche Volumen der Dicke E eine zweite Haftschicht (CA') umfasst, die <u>entweder</u> eine durch Oxidionen leitende Kristallstruktur aufweist, <u>oder</u> eine gemischt leitende Kristallstruktur, <u>oder</u> eine Mischung der vorerwähnten Kristallstrukturen, die auf die Oberfläche $S'_0$ der dichten Schicht (CD) aufgebracht ist und auf deren Außenfläche $S'_1$ die Elektrode (EP') aufgebracht ist, wobei die Schicht (CA') eine Dicke $e'_1$ aufweist, die nicht Null ist, sowie eine spezifische Oberfläche $s'_{1\omega}$ und eine Rauhigkeit $R'_1$.

**3.** Membran wie in einem der Ansprüche 1 oder 2 definiert, wobei das endliche Volumen der dicke E keine poröse Deckschicht (ER') umfasst.

**4.** Membran wie in einem der Ansprüche 1 bis 3 definiert, wobei das endliche Volumen der Dicke E außerdem eine Zwischenschicht $(CI_{23})$ umfasst, die aus Materialien besteht, die aus der Elektrode (EP) und dem Stromsammler (CC) stammen, wobei die Schicht $(CI_{23})$ einen thermischen Ausdehnungskoeffizient $(CET_{23})$ aufweist, dessen Wert zwischen dem, $CET_2$, von (EP) und dem, $CET_3$, von (CC) liegt, und vorzugsweise über $CET_2$ und unter $CET_3$, wobei die Zwischenschicht auf die Oberfläche $S_2$ von (EP) aufgebracht ist, und auf deren Außenfläche $S_{23}$ der Sammler (CC) aufgebracht ist, wobei die Schicht $CI_{23}$ eine Dicke $e_{23}$ aufweist, die nicht Null ist, sowie eine spezifische Oberfläche $s_{23\omega}$ und eine Rauhigkeit $R_{23}$.

**5.** Membran wie in einem der Ansprüche 1 bis 4 definiert, wobei das endliche Volumen der Dicke E außerdem eine zweite Zwischenschicht umfasst, die aus Materialien besteht, die aus der Elektrode (EP') und dem Stromsammler (CC') stammen, wobei die Schicht $(CI'_{23})$ einen thermischen Ausdehnungskoeffizient $(CET'_{23})$ aufweist, dessen Wert zwischen dem, $CET'_2$, von (EP') und dem, $CET'_3$, von (CC') liegt, und vorzugsweise über $CET'_2$ und unter $CET'_3$, wobei die Zwischenschicht auf die Oberfläche $S'_2$ von (EP') aufgebracht ist, und auf deren Außenfläche $S'_{23}$ der Sammler (CC') aufgebracht ist, wobei die Schicht $CI'_{23}$ eine Dicke' $e_{23}$ aufweist, die nicht Null ist, sowie eine

spezifische Oberfläche $s'_{23\omega}$ und eine Rauhigkeit $R'_{23}$.

**6.** Membran wie in einem der Ansprüche 1 bis 5 definiert, wobei das endliche Volumen der Dicke E außerdem eine Zwischenschicht ($CI_{34}$) umfasst, die aus Materialien besteht, die aus dem Stromsammler (CC) und der Deckschicht (ER) stammen, wobei die Schicht ($CI_{34}$) einen thermischen Ausdehnungskoeffizient ($CET_{34}$) aufweist, dessen Wert zwischen dem, $CET_3$, von (CC) und dem, $CET_4$, von (ER) liegt, und vorzugsweise über $CET_3$ und unter $CET_4$, wobei die Zwischenschicht auf die Oberfläche $S_3$ von (CC) aufgebracht ist, und auf deren Außenfläche $S_{34}$ die Deckschicht (ER) aufgebracht ist, wobei die Schicht $CI_{34}$ eine Dicke $e_{34}$ aufweist, die nicht Null ist, sowie eine spezifische Oberfläche $s_{34\omega}$ und eine Rauhigkeit $R_{34}$.

**7.** Membran wie in einem der Ansprüche 1, 2 und 4 bis 6 definiert, wobei das endliche Volumen der Dicke E außerdem eine zweite Zwischenschicht ($CI'_{34}$) umfasst, die aus Materialien besteht, die aus dem Stromsammler (CC') und der Deckschicht (ER') stammen, wobei die Schicht ($CI'_{34}$) einen thermischen Ausdehnungskoeffizient ($CET'_{34}$) aufweist, dessen Wert zwischen dem, $CET'_3$, von (EP') und dem, $CET'_4$, von (ER') liegt, und vorzugsweise über $CET'_3$ und unter $CET'_4$, wobei die Zwischenschicht auf die Oberfläche $S'_3$ von (CC') aufgebracht ist, und auf deren Außenfläche $S'_{34}$ die Deckschicht (ER') aufgebracht ist, wobei die Schicht $CI'_{34}$ eine Dicke $e'_{34}$ aufweist, die nicht Null ist, sowie eine spezifische Oberfläche $s'_{34\omega}$ und eine Rauhigkeit $R'_{34}$.

**8.** Keramikmembran wie in einem der Ansprüche 1 bis 7 definiert, **dadurch gekennzeichnet, dass** $e_2 = e'_2$.

**9.** Keramikmembran wie in einem der Ansprüche 1 bis 8 definiert, **dadurch gekennzeichnet, dass** $e_3 = e'_3$.

**10.** Keramikmembran wie in einem der Ansprüche 2 bis 9 definiert, **dadurch gekennzeichnet, dass** $e_1 = e'_1$.

**11.** Keramikmembran wie in einem der Ansprüche 5 bis 10 definiert, **dadurch gekennzeichnet, dass** $e_{23} = e'_{23}$.

**12.** Keramikmembran wie in einem der Ansprüche 7 bis 11 definiert, **dadurch gekennzeichnet, dass** $e_{34} = e'_{34}$.

**13.** Keramikmembran wie in einem der Ansprüche 1, 2 und 7 bis 12 definiert, **dadurch gekennzeichnet, dass** $e_4 = e'_4$.

**14.** Keramikmembran wie in einem der Ansprüche 1 bis 13 definiert, **dadurch gekennzeichnet, dass**:

die Dicke $e_0$ zwischen etwa 0,01 mm und etwa 2 mm und insbesondere zwischen 0,05 mm und etwa 1 mm liegt,
die Dicken $e_1$ und $e'_1$ zwischen etwa 1 $\mu$m und etwa 500 $\mu$m und insbesondere zwischen 10 $\mu$m und 300 $\mu$m liegen,
die Dicken $e_2$ und $e'_2$ zwischen etwa 1 $\mu$m und etwa 500 $\mu$m und insbesondere zwischen 10 $\mu$m und 300 $\mu$m liegen,
die Dicken $e_3$ und $e'_3$ zwischen etwa 1 $\mu$m und etwa 500 $\mu$m und insbesondere zwischen 10 $\mu$m und 300 $\mu$m liegen,
die Dicken $e_4$ und $e'_4$ zwischen etwa 1 $\mu$m und etwa 500 $\mu$m und insbesondere zwischen 10 $\mu$m und 300 $\mu$m liegen,
die Dicken $e_{23}$ und $e'_{23}$ zwischen etwa 1 $\mu$m und etwa 500 $\mu$m und insbesondere zwischen 10 $\mu$m und 300 $\mu$m liegen,
die Dicken $e_{34}$ und $e'_{34}$ zwischen etwa 1 $\mu$m und etwa 500 $\mu$m und insbesondere zwischen 10 $\mu$m und 300 $\mu$m liegen.

**15.** Keramikmembran wie in einem der Ansprüche 1 bis 14 definiert, die aus einer Platte mit ebener Oberfläche S und der Dicke E besteht, **dadurch gekennzeichnet, dass** jede der Oberflächen $S_0$, $S'_0$, $S_1$, $S_2$, $S'_2$, $S_3$, $S'_3$, $S_4$ und gegebenenfalls $S'_1$, $S'_4$, $S_{23}$, $S'_{23}$, $S_{34}$ und $S'_{34}$ gleich S ist und vorzugsweise aus einer Platte besteht, welche die Länge L aufweist, die zwischen etwa 1 cm und etwa 1 m und insbesondere zwischen 5 cm und etwa 50 cm liegt und welche die Breite 1 aufweist, die zwischen etwa 1 cm und etwa 1 m und insbesondere zwischen 5 cm und etwa 50 cm liegt.

**16.** Keramikmembran wie in einem der Ansprüche 1 bis 14 definiert, die röhrenförmig ist und aus einem Hohlzylinder besteht, der an beiden oder nur an einem Ende offen ist, den Außendurchmesser D und den Innendurchmesser d hat, **dadurch gekennzeichnet, dass** die Trägerschicht die dichte Schicht (CD) des Feststoffelektrolyten ist, dass die Oberflächen $S_0$, $S'_0$, $S_1$, $S_2$, $S'_2$, $S_3$, $S'_3$, $S_4$ und gegebenenfalls $S'_1$, $S'_4$, $S_{23}$, $S'_{23}$, $S_{34}$ und $S'_{34}$ zylindrisch und koaxial sind und dass die Dicke E der Membran gleich der Hälfte der Differenz (D-d) ist.

**17.** Keramikmembran wie in Anspruch 16 definiert, deren Länge L zwischen etwa 1 cm und etwa 1 m und insbesondere zwischen 10 cm und 50 cm liegt.

**18.** Keramikmembran wie in einem der Ansprüche 3 und 16 oder 17 definiert, die aus einem Hohlzylinder besteht, der an beiden oder nur an einem Ende offen ist, wobei die kathodische Elektrode (EP) und der kathodische Stromsammler (CC) auf der Innenseite des Zylinders angeordnet sind und die Anode (EP') und der anodische Stromsammler (CC') auf der Außenseite des Zylinders angeordnet sind.

**19.** Keramikmembran wie in einem der Ansprüche 1 bis 18 definiert, wobei der Feststoffelektrolyt durch die Formel (I) dargestellt wird:

$$(M_\alpha O_\beta)_{1-x} (R_\gamma O_\delta)_x \qquad (I)$$

wobei M mindestens ein trivalentes oder tetravalentes Atom darstellt, das unter Bi, Ce, Zr, Ga, Th oder Hf gewählt wird, $\alpha$ und $\beta$ so sind, dass die Struktur $M_\alpha O_\beta$ elektrisch neutral ist, R mindestens ein divalentes oder trivalentes Atom darstellt, das unter Mg, Ca, Ba, Sr, Gd, Sc, Yb, Y, Sm oder La gewählt wird, $\gamma$ und $\delta$ so sind, dass die Struktur $R_\gamma O_\delta$ elektrisch neutral ist, x zwischen 0,05 und 0,30 und insbesondere zwischen 0,075 und 0,15 liegt.

**20.** Keramikmembran wie in Anspruch 19 definiert, wobei das Feststoffelektrolyt ein keramisches Oxid oder eine Mischung keramischer Oxide ist, die gewählt werden unter $ZrO_2$, $CeO_2$, $HfO_2$, $ThO_2$, $Ga_2O_3$, oder $Bi_2O_3$, dotiert mit einem oder mehreren Oxiden, die gewählt werden unter MgO, CaO, BaO, SrO, $Gd_2O_3$, $Sc_2O_3$, $Yb_2O_3$, $Er_2O_3$, $Y_2O_3$, $Sm_2O_3$, $In_2O_3$, $Nb_2O_3$ und $La_2O_3$.

**21.** Keramikmembran wie in Anspruch 20 definiert, **dadurch gekennzeichnet, dass** das Feststoffelektrolyt mit Yttriumoxid stabilisiertes Zirkoniumoxid der Formel (Ia) ist:

$$(ZrO_2)_{1-x} (Y_2O_3)_x \qquad (Ia)$$

wobei x zwischen 0,05 und 0,15 liegt.

**22.** Keramikmembran wie in den Ansprüchen 1 bis 21 definiert, wobei die Elektroden (EP) und (EP') aus einem Material oder Materialgemisch der Formel (II) sind:

$$M_1M_2O_3, \qquad (II)$$

wobei $M_1$ ein oder mehrere Atome darstellt, die gewählt sind unter La, Ce, Pr, Nd, Pm, Sm, Eu, Gd, Tb, Dy, Ho, Er, Tm, Yb, Lu, Y, Mg, Ca, Sr oder Ba, $M_2$ ein oder mehrere Atome darstellt, die gewählt sind unter Sc, Ti, V, Cr, Mn, Fe, Co, Ni, Cu oder Zn.

**23.** Keramikmembran wie in Anspruch 22 definiert, wobei die Elektroden (EP) und (EP'), gleicher oder verschiedener Zusammensetzung sind, und aus einem Material oder Materialgemisch sind, das gewählt wird unter $LaNiO_3$, $Ca_uLa_vMnO_w$, $La_uSr_vMnO_w$, $La_uSr_vCoO_w$, $Ca_uLa_vCoO_w$, $Gd_uSr_vCoO_w$, $La_uSr_vCrO_w$, $La_uSr_vFeO_w$ oder $La_uSr_vFe_cCo_dO_w$, wobei u+v und c+d gleich 1 sind und w so ist, dass die betreffende Struktur elektrisch neutral ist.

**24.** Keramikmembran wie in den Ansprüchen 1 bis 23 definiert, wobei die Schichten (CA) und (CA') die gleiche chemische Zusammensetzung aufweisen wie der Feststoffelektrolyt.

**25.** Keramikmembran wie in Anspruch 24 definiert, **dadurch gekennzeichnet, dass** sie ein endliches Volumen umfasst, das nicht Null ist, und folgendes umfasst:

a) eine Schicht eines Feststoffelektrolyten mit einem kontinuierlichen Gradienten der kontrollierten Oberflächenporosität (CE), der bei der Elektrolysetemperatur eine durch Oxidionen leitende Kristallstruktur aufweist, die eine Dicke $e_0+e_1+e'_1$ aufweist, die nicht Null ist, sowie gleiche gegenüberliegende Außenflächen $S_1$ und $S'_1$ mit den gleichen spezifischen Oberflächen $s_{1\omega}$ und $s'_{1\omega}$ und den gleichen Rauhigkeiten $R_1$ und $R'_1$,
b) eine poröse Kathode (EP) und eine poröse Anode (EP'), die gemischt leitend sind, gleiche oder verschiedene chemische Zusammensetzungen aufweisen und von denen eine auf die Oberfläche $S_1$ von (CA) aufgebracht ist, und die andere auf die Oberfläche $S'_0$ von (CD), wobei die Elektroden jeweils gleiche oder verschiedene Außenflächen $S_2$ und $S'_2$ aufweisen, die nicht Null sind, und gleiche oder verschiedene Dicken $e_2$ und $e'_2$, die

nicht Null sind, und

c) einen Kathodenstromsammler (CC) und einen Anodenstromsammler (CC') mit gleichen oder verschiedenen chemischen Zusammensetzungen, die jeweils auf die Oberflächen $S_2$ und $S'_2$ von (EP) und (EP') aufgebracht sind, wobei die Stromsammler (CC) und (CC') jeweils die gleichen oder verschiedenen Außenflächen $S_3$ und $S'_3$ aufweisen, die nicht Null sind, sowie gleiche oder verschiedene Dicken $e_3$ und $e'_3$, die nicht Null sind,

d) eine poröse Deckschicht (ER), die aus einem Material oder Materialgemisch besteht, das chemisch mit den Materialien oder Materialgemischen der Elektroden, Stromsammler, Haftschicht und Feststoffelektrolyten kompatibel ist, dessen Sintertemperatur den Sintertemperaturen der Materialien oder Materialgemische der Elektroden, Stromsammler, Haftschicht und Feststoffelektrolyten sehr ähnlich ist, wobei die Schicht (ER) auf die Oberfläche $S_3$ von (CC) aufgebracht ist, und eventuell

e) eine poröse Deckschicht (ER'), die aus einem Material oder Materialgemisch besteht, das chemisch mit den Materialien oder Materialgemischen der Elektroden, Stromsammler, Haftschicht und Feststoffelektrolyten kompatibel ist, dessen Sintertemperatur den Sintertemperaturen der Materialien oder Materialgemische der Elektroden, Stromsammler, Haftschicht und Feststoffelektrolyten sehr ähnlich ist, wobei die Schicht (ER') auf die Oberfläche $S'_3$ von (CC') aufgebracht ist, wobei die Deckschicht eine Oberfläche $S'_4$ und eine Dicke $e'_4$ aufweist, die nicht Null sind,

**dadurch gekennzeichnet, dass** die Dicke E des Volumens der Membran gleich der Summe der Dicken jedes der erwähnten Elemente ist.

**26.** Keramikmembran wie in den Ansprüchen 1 bis 23 definiert, wobei die Schichten (CA) und (CA') die gleiche chemische Zusammensetzung aufweisen wie die Elektroden (EP) und (EP').

**27.** Keramikmembran wie in den Ansprüchen 1 bis 23 definiert, wobei die Schichten (CA) und (CA') gleicher oder verschiedener Zusammensetzung sind und aus einer Mischung von Verbindungen der Formel (Ia) und der Formel (II) bestehen.

**28.** Keramikmembran wie in einem der Ansprüche 1 bis 26 definiert, wobei die Stromsammler (CC) und (CC') im Wesentlichen entweder aus einem Metall bestehen oder aus einem Metalllack, insbesondere aus einem Platinlack, einem Palladiumlack oder einem Goldlack oder einem Silberlack, oder aus einer Mischung Metall/"Inertoxid"-Keramik, insbesondere einer Mischung Metall/Aluminiumoxid, oder aus einer Mischung Metall/Oxidkeramik ("gemischt leitend"), insbesondere eine Mischung Metall/Perovskitmaterial, oder aus einer Mischung Metall/Oxidkeramik ("ionenleitend") und insbesondere eine Mischung Metall/Zirkon, die mit Yttrium (8 Molprozent) stabilisiert ist, oder aus einer Mischung Metall Oxidkeramik ("elektronenleitend") und insbesondere aus einer Mischung Metall/Nickeloxid, oder aus einer Mischung Metall/Carbid, insbesondere aus einer Mischung Metall/Siliziumcarbid, oder aus einer Mischung Metall/Nitrid und insbesondere einer Mischung Siliziumnitrid, oder aus einer Mischung einer oder mehrerer der vorstehend definierten Mischungen.

**29.** Keramikmembran wie in Anspruch 28 definiert, wobei die Stromsammler (CC) und (CC'), gleicher oder verschiedener Zusammensetzung, aus einer Mischung eines Metalls, das entweder gewählt wird unter den Übergangsmetallen, insbesondere unter Silber, Kupfer und Nickel, oder unter den Edelmetallen und insbesondere unter Gold, Platin und Palladium mit entweder einer oder mehreren Verbindungen der Formel (I) wie vorstehend definiert, oder aber einer oder mehreren Verbindungen der Formel (II) wie vorstehend definiert.

**30.** Keramikmembran wie in Anspruch 29 definiert, wobei der kathodische Stromsammler (CC) entweder aus einer Mischung von Silber und Zirkon ist, die mit Yttrium dotiert ist, vorzugsweise YSZ (8%), oder aus einer Mischung von Silber mit einer oder mehreren Verbindungen der Formel (II), vorzugsweise aus Lanthanmanganit, das mit Strontium (LSM) und insbesondere $La_{0,9}Sr_{0,1}MnO_{3-\delta}$ dotiert ist, oder aus einer Mischung von Silber, ionenleitender Keramik und gemischtleitender Keramik und vorzugsweise der Mischung Ag-YSZ(8%)-LSM.

**31.** Keramikmembran wie in einem der Ansprüche 28 oder 29 definiert, wobei der anodische Stromsammler (CC') entweder aus abgelagertem porösem Gold, oder aus einer Mischung von Gold und Zirkon ist, die mit Yttrium dotiert ist, vorzugsweise YSZ (8%), oder aus einer Mischung von Gold mit einer oder mehreren Verbindungen der Formel (II), vorzugsweise aus Lanthanmanganit, das mit Strontium (LSM) und insbesondere $La_{0,9}Sr_{0,1}MnO_{3-\delta}$ dotiert ist, oder Lanthan-Ferrocobaltit, das mit Strontium (LSCoFe) und insbesondere $La_{0,8}Sr_{0,8}Co_{0,8}Fe_{0,2}O_w$ dotiert ist.

**32.** Keramikmembran wie in einem der Ansprüche 1 bis 31 definiert, wobei die Deckschichten (ER) und gegebenenfalls (ER') isolierend sind.

**33.** Keramikmembran wie in einem der Ansprüche 1 bis 31 definiert, wobei die Deckschichten (ER) und gegebenenfalls (ER') aus Verbindungen oder Gemischen von Verbindungen der Formel (II) und insbesondere aus Verbindungen der Formel $La_uSr_vCo_dFe_cO_w$ sind, wobei u+v und c+d gleich 1 sind, und w so ist, dass die betreffende Struktur elektrisch neutral ist.

**34.** Keramikmembran wie in Anspruch 33 definiert, wobei die Deckschichten (ER) und gegebenenfalls (ER') aus einer Verbindung der Formel (IIa) sind:

$$La_{0,8}Sr_{0,2}Co_{0,8}Fe_{0,2}O_w \qquad (IIa)$$

wobei w so ist, dass die Struktur der Formel (IIa) elektrisch neutral ist.

**35.** Keramikmembran wie in einem der Ansprüche 16 bis 35 definiert, **dadurch gekennzeichnet dass** sie mit Kugeln aus Mullit, Zirkon, Aluminiumoxid oder Perovskit gefüllt ist.

**37.** Verwendung einer Keramikmembran wie in irgendeinem der Ansprüche 1 bis 36 definiert, um Sauerstoff aus der Luft oder aus einem Gasgemisch, in dem er enthalten ist, abzutrennen.

**38.** Verwendung einer Keramikmembran wie in einem der Ansprüche 1 bis 36 definiert, um hochreinen Drucksauerstoff herzustellen.

**39.** Verwendung einer Keramikmembran wie in irgendeinem der Ansprüche 1 bis 36 definiert, um die Gegenwart von Sauerstoff in einer Gasatmosphäre zu messen.

**40.** Herstellungsverfahren für hochreinen Sauerstoff, unter hohem Druck oder nicht, das aus der Zerlegung des Luftsauerstoffs durch Ionenleitung durch eine Elektrochemische Zelle besteht, wie in irgendeinem der Ansprüche 18 bis 35 definiert, in einem geschlossenen Gehäuse.

**41.** Verfahren zur Entfernung von Sauerstoff aus einer Gasatmosphäre, in der Anwendungen durchgeführt werden, die eine Atmosphäre mit einem niedrigen Sauerstoffgehalt oder ohne Sauerstoff benötigen, das aus der Abtrennung von Sauerstoff aus der betreffenden Atmosphäre durch Ionenleitung durch eine Membran wie in irgendeinem der Ansprüche 1 bis 36 definiert besteht.

**42.** Verfahren zur Herstellung thermischer und elektrischer Energie in einer Brennstoffzelle aus Feststoff-Brennstoffzelle, durch Reaktion von Sauerstoff und Wasserstoff, **dadurch gekennzeichnet, dass** der Sauerstoff erhalten wird, indem man die Luft durch eine Keramikmembran wie in irgendeinem der Ansprüche 1 bis 36 definiert auftrennt.

▨ Electrolyte solide YSZ (8%mol.)

▨ Couche conducteur mixte (LSM)

▨ Couche de collecteur (Ag/LSM)

▨ Couche de collecteur (Au/LSCoFe)

▨ Couche protectrice (LSCoFe)

● Fils d'or

● Fils d'argent (Ag)

○ Bagues (NiCr)

Zone Active

**Figure 1A**

**Figure 1B**

**Figure 1C**

Figure 1D

Vieillissement tube cellule haute pression: Surface-rugosité YSZ@750°C@Patm
Collecteur de courant anodique: Au, Au-porogène, Au-pérovskite,
Collecteur de courant cathodique: Ag-LSM + LSCoFe

Figure 2 :

**Vieillissement tube cellule haute pression**
**Surface-rugosité YSZ@800-830°C@120-140 bar**
**Collecteur de courant anodique: Au, Au-pérovskite,**
**Collecteur de courant cathodique: Ag-LSM + LSCoFe**

*Tube Au/LSCoFe*
*800°C - 7A - 120 bars*

*Laque Au*
*830°C - 3,5 A - 140 bars*

Tension / V

Temps / heures

**Figure 3**